(19) Europäisches Patentamt / European Patent Office / Office européen des brevets

(11) **EP 4 642 102 A1**

(12) **EUROPEAN PATENT APPLICATION**
published in accordance with Art. 153(4) EPC

(43) Date of publication:
**29.10.2025 Bulletin 2025/44**

(21) Application number: **23917142.4**

(22) Date of filing: **02.11.2023**

(51) International Patent Classification (IPC):
**H04W 48/20** (2009.01)

(52) Cooperative Patent Classification (CPC):
**H04W 16/18; H04W 36/08; H04W 48/20;
H04W 52/02; H04W 84/00;** Y02D 30/70

(86) International application number:
**PCT/CN2023/129396**

(87) International publication number:
**WO 2024/152674 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.01.2023 CN 202310143630**

(71) Applicant: **Huawei Technologies Co., Ltd.
Shenzhen, Guangdong 518129 (CN)**

(72) Inventors:
• **YANG, Zhenan
Shenzhen, Guangdong 518129 (CN)**
• **BAO, Dewei
Shenzhen, Guangdong 518129 (CN)**
• **DING, Lv
Shenzhen, Guangdong 518129 (CN)**
• **HE, Yuan
Shenzhen, Guangdong 518129 (CN)**
• **ZHANG, Hao
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **METHOD AND APPARATUS FOR SELECTING AP**

(57) This application discloses an AP selection method and apparatus, and relates to the field of network technologies. The method includes: determining a first AP in a plurality of APs based on neighbor relationships and/or path losses between the plurality of APs in a network, where the first AP is configured to provide, when the network enters a power-saving state, an association service for a terminal intending to access the network. Because the first AP is obtained based on the neighbor relationships and/or the path losses between the plurality of APs, and is not determined based on a terminal behavior, when the network enters the power-saving state, basic signal coverage of the network can be ensured by using the first AP, and a network use requirement can be ensured while burst service access is monitored, so that power saving can be implemented to a large extent while ensuring user experience.

Group a plurality of APs in a network into one or more topology groups based on neighbor relationships and/or path losses between the plurality of APs in the network, where each topology group includes one or more APs — 501

Determine an AP set based on the neighbor relationships and/or the path losses between the plurality of APs in the network, where the AP set includes a plurality of candidate APs — 502

Determine a first AP in the plurality of candidate APs based on terminal association features of the plurality of candidate APs, where a terminal association feature of any one candidate AP indicates a status of association between the any one candidate AP and a terminal — 503

In a power-saving period of the network, control the network to enter a power-saving state, to enable the first AP to provide an association service for a terminal intending to access the network, and to enable at least one other AP to enter a power-saving state, where the at least one other AP is an AP other than the first AP in the plurality of APs — 504

In the power-saving period, if a service trigger indication from a terminal is detected by an AP in the plurality of APs that does not enter a power-saving state, control the network to exit the power-saving state, to enable the plurality of APs to provide an association service for the terminal — 505

In the power-saving period, if duration in which the terminal continuously associates with a second AP reaches a first duration threshold, control the network to enter the power-saving state again, to enable the first AP to provide an association service for a terminal intending to access the network; and keep the second AP continuing to provide the association service for the terminal, to enable an AP other than the second AP in the at least one other AP to enter a power-saving state — 506

After the power-saving period ends, control the network to exit the power-saving state, to enable the plurality of APs to provide the association service for the terminal — 507

FIG. 5

## Description

This application claims priority to Chinese Patent Application No. 202310143630.3, filed on January 20, 2023 and entitled "AP SELECTION METHOD AND APPARATUS", which is incorporated herein by reference in its entirety.

## TECHNICAL FIELD

This application relates to the field of network technologies, and in particular, to an AP selection method and apparatus.

## BACKGROUND

With rapid development of a wireless local area network (wireless local area network, WLAN), access points (access point, AP) for enterprise-level WLAN networking are densely deployed to satisfy requirements of indoor coverage services such as campus networks, enterprise campuses, automatic production workshops, and hospitals. Therefore, how to control a network to perform power saving is a technical topic of high value.

Currently, when a network is controlled to perform power saving, an AP without user load in the network is controlled to enter a power-saving state, and transmit power of an AP deployed around the AP is increased, so that the AP with increased transmit power covers original signal coverage of the AP that enters the power-saving state.

However, this solution has a risk of a signal coverage hole. For example, if there is no station (station, STA) in a region, all APs deployed in the region enter a power-saving state. Consequently, in a process in which all the APs in the region are in the power-saving state, if a STA performs access in the region, no AP provides an association service for the STA.

## SUMMARY

This application provides an AP selection method and apparatus. After an AP is selected by using the method provided in this application, when a network enters a power-saving state, the selected AP may provide an association service for a terminal intending to access the network. In this way, power saving can be implemented to a large extent while user experience is ensured. Technical solutions provided in this application are as follows.

According to a first aspect, this application provides an AP selection method. The method includes: determining a first AP in a plurality of APs based on neighbor relationships and/or path losses between the plurality of APs in a network, where the first AP is configured to provide, when the network enters a power-saving state, an association service for a terminal intending to access the network.

In the AP selection method, a device can determine the first AP in the plurality of APs based on the neighbor relationships and/or the path losses between the plurality of APs in the network, so that the first AP provides, when the network enters the power-saving state, the association service for the terminal intending to access the network. Because the first AP is obtained based on the neighbor relationships and/or the path losses between the plurality of APs, and is not determined based on a terminal behavior, when the network enters the power-saving state, basic signal coverage of the network can be ensured by using the first AP, and a network use requirement can be ensured while burst service access is monitored, so that power saving can be implemented to a large extent while ensuring user experience.

In a power-saving period, the first AP is configured for signal coverage, there is a high probability that an AP other than the first AP in the plurality of APs enters a power-saving state, and an AP in a power-saving state cannot provide the association service for the terminal. Therefore, the first AP may be further selected with reference to terminal association features of a plurality of candidate APs, to ensure a capability of the first AP for providing, in the power-saving period, the association service for the terminal. A terminal association feature of any one AP indicates a status of association between the AP and a terminal. In an implementation, determining the first AP in the plurality of APs based on the neighbor relationships and/or the path losses between the plurality of APs in the network includes: determining an AP set based on the neighbor relationships and/or the path losses between the plurality of APs, where the AP set includes a plurality of candidate APs; and determining the first AP in the plurality of candidate APs based on terminal association features of the plurality of candidate APs, where a terminal association feature of any one candidate AP indicates a status of association between the any one candidate AP and a terminal.

In consideration of features of some specified terminals, if switching of APs associated with the specified terminals may affect service implementation of the terminals, for example, cause service interruptions of the specified terminals, candidate APs associated with the specified terminals may be determined from the plurality of candidate APs based on the terminal association features of the plurality of candidate APs, and the first AP is determined based on the candidate APs associated with the specified terminals. In an implementation, determining the first AP in the plurality of candidate APs based on the terminal association features of the plurality of candidate APs includes: determining, in the plurality of candidate APs based on the terminal association features of the plurality of candidate APs, an AP associated with a specified terminal; and determining the first AP based on the AP associated with the specified terminal.

After the first AP is determined from the plurality of APs, operating states of the plurality of APs may be controlled in the power-saving period of the network, to control the network to enter the power-saving state. An implementation may include: in the power-saving period of the network, controlling the network to enter the power-saving state, to enable the first AP to provide an association service for a terminal intending to access the network, and to enable at least one other AP to enter a power-saving state, where the at least one other AP is an AP other than the first AP in the plurality of APs.

In an implementation, controlling the network to enter the power-saving state, to enable the first AP to provide the association service for the terminal intending to access the network includes: adjusting transmit power of the first AP, to enable signal coverage obtained by adjusting the transmit power of the first AP to cover signal coverage of the plurality of APs. In this way, the first AP can be used to implement basic coverage of the network, and a function of monitoring terminal association is implemented.

Optionally, after the network is controlled to enter the power-saving state, the method further includes: in the power-saving period, if a service trigger indication from a terminal is detected by an AP in the plurality of APs that does not enter a power-saving state, controlling the network to exit the power-saving state, to enable the plurality of APs to provide an association service for the terminal. In the power-saving period, if the service trigger indication from the terminal is detected by the AP in the plurality of APs that does not enter the power-saving state, it indicates that a user using the terminal may have a service requirement. In this case, the network is controlled to exit the power-saving state, so that an AP in a normal operating state can provide the association service for the terminal.

Further, in the power-saving period, if duration in which the terminal continuously associates with a second AP reaches a first duration threshold, it indicates that there is a high probability that the terminal uses, in a long period of time, a network provided by the second AP, instead of using a network provided by another AP. In this case, the network may be controlled to perform power saving again. After the network is controlled to exit the power-saving state, the method further includes: in the power-saving period, if the duration in which the terminal continuously associates with the second AP reaches the first duration threshold, controlling the network to enter the power-saving state again, to enable the first AP to provide an association service for a terminal intending to access the network; and keep the second AP continuing to provide the association service for the terminal, to enable an AP other than the second AP in the at least one other AP to enter a power-saving state.

Optionally, if the first AP is determined from the plurality of candidate APs, before the network is controlled to enter the power-saving state again, the method further includes: if the plurality of candidate APs include the second AP, updating the second AP to the first AP. Updating the second AP to the first AP means switching the second AP to the first AP, and switching an original first AP to a power-saving AP, where the original first AP is also a candidate AP of the first AP. In this case, an implementation process of controlling the first AP again to provide the association service for the terminal intending to access the network, and controlling an AP other than the second AP to enter the power-saving state is actually: controlling the second AP to provide an association service for a terminal intending to access the network, and controlling the AP other than the second AP and the original first AP to enter the power-saving state. Controlling the second AP to provide the association service for the terminal intending to access the network may be implemented by controlling transmit power of the second AP. Similarly, controlling the AP to enter the power-saving state may also be implemented by controlling transmit power of the corresponding AP.

In an implementation, when no AP associated with a specified terminal exists in an AP other than the first AP in the plurality of APs, the at least one other AP includes all APs in the plurality of APs other than the first AP. When an AP associated with a specified terminal exists in an AP other than the first AP in the plurality of APs, the at least one other AP includes all APs in the plurality of APs other than the first AP and the AP associated with the specified terminal.

An AP entering a power-saving state includes: A power supply of the AP is in an off state. Alternatively, the AP operates in a low power consumption mode, where power consumption of the AP in the low power consumption mode is lower than power consumption of the AP in a normal operating mode. In an implementation, the AP may be controlled to enter the low power consumption mode in manners such as turning off a power supply of a radio frequency module of the AP, disabling a radio frequency transmit and receive channel, and reducing a quantity of antennas configured to receive and transmit a signal. When the AP is controlled to enter the low power consumption mode, transmit power of the AP may be further reduced, so that the AP does not generate signal coverage.

Optionally, the specified terminal may be a terminal associated with an AP that cannot or is not suitable to be switched after the specified terminal is associated with the AP, and/or a terminal with heavy service load. In an implementation, the specified terminal has one or more of the following features: having no capability of actively associating with an AP, having no roaming capability, service load being greater than a load threshold, or duration of continuous association with an AP being greater than a second duration threshold. For example, the specified terminal may be an internet of things (internet of things, IOT) terminal, a big service terminal, or a silent terminal.

Before the network is controlled to enter the power-saving state, a network status may be further determined, to determine whether the network needs to be controlled to enter the power-saving state. For example, in the power-saving period of the network, controlling the network to enter the power-saving state includes: when a moment of the network is in the power-saving period, if no roaming event occurs in the network within specified duration before the moment, controlling the network to enter the power-saving state.

In an implementation, the first AP is determined from the plurality of APs based on centrality of each of the plurality of APs, and centrality of any one of the plurality of APs is obtained based on the neighbor relationships and/or the path losses between the plurality of APs. Centrality of an AP indicates a degree of centrality of the AP in an entire network. The centrality is also referred to as a centrality degree. The centrality can reflect an impact degree of the AP on signal quality in the network.

Optionally, the centrality includes one or more of the following: degree centrality or closeness centrality.

Degree centrality of an AP is for measuring a degree of connectivity between the AP and another AP in the current network. The another AP is an AP other than the first AP in the plurality of APs in the current network. If there is a neighbor relationship between two APs, it is considered as that the two APs are connected. If there is no neighbor relationship between two APs, it is considered as that the two APs are not connected. Therefore, a degree of connectivity between an AP and another AP in a current network may be understood as a proportion of a total quantity of other APs that have a neighbor relationship with the AP in the current network to a total quantity of APs in the current network. A higher degree of connectivity between the AP and another AP in the current network indicates higher degree centrality of the AP, and indicates that the AP is located at a more central position in the current network. In some implementations, for a network having N APs, a value of degree centrality of any one AP in the network may be equal to a proportion of a total quantity of APs that are directly connected to the AP and that are in the remaining N-1 APs in the network to the total quantity of APs in the current network.

Closeness centrality is for measuring a degree of closeness between an AP and another AP in the network. The closeness centrality may be represented by an average length of shortest paths for signal transmission between the AP and all other APs. A smaller average length of the AP indicates higher closeness centrality of the AP, and indicates that the AP is located at a more central position in the network. When two APs are indirectly connected, the two APs may be connected through a plurality of paths, and the shortest path is a path with a smallest value assigned to measurement indicators of the plurality of paths. When the measurement indicator is a neighbor relationship, a value assigned to a measurement indicator of any path is a total quantity of neighbor relationships that the path passes through. When the measurement indicator is a path loss, a value assigned to a measurement indicator of any path is a sum of path losses between every two neighboring APs in all APs that the path passes through.

In some implementations, for a network having N APs, a value Cci of closeness centrality of any APi in the network may satisfy the following Formula 1, where dis(i,j) in Formula 1 indicates a length of the shortest path for signal transmission between an AP i and an AP j.

$$Cci = \frac{N-1}{\sum_{j=1}^{N} dis(i,j)} \quad \text{(Formula 1)}$$

In another implementation, the first AP is determined from the plurality of APs based on an average path loss of each of the plurality of APs, and an average path loss of any one of the plurality of APs is obtained based on the path losses between the plurality of APs. A path loss between APs is a loss caused by a transmission medium during transmission of a radio electromagnetic wave between the APs. When an AP 1 transmits a signal to an AP 2, a path loss of a signal emitted by the AP 1 may be obtained based on transmit power of the AP 1 and strength of the signal received by the AP 2. For example, the path loss of the signal emitted by the AP 1 may be equal to a difference between the transmit power of the AP 1 and the strength of the signal received by the AP 2. The strength of the signal received by the AP 2 may be obtained based on a received signal strength indicator of the signal received by the AP 2.

In still another implementation, the first AP is further determined from the plurality of APs based on an association preference degree of each of the plurality of APs, an association preference degree of any one of the plurality of APs is obtained based on a terminal association feature of the any one AP, and the terminal association feature of the any one AP indicates a status of association between the any one AP and a terminal.

An association preference degree of an AP indicates a preference tendency for terminal association. A higher association preference degree of the AP indicates that a terminal tends to be associated with the AP. Optionally, the association preference degree of the AP may be obtained based on a terminal association feature of the AP. In an implementation, the association preference degree of the AP is in positive correlation with an indicator that reflects the terminal association feature of the AP. An implementation of the positive correlation may include: The association preference degree of the AP may be equal to a weighted sum of indicators that reflect the terminal association feature of the AP. Optionally, the terminal association feature of the any one AP includes one or more of the following: total duration in which a terminal associates with the any one AP, a total quantity of times that the any one AP provides association for a terminal, or a total quantity of terminals that have associated with the any one AP.

According to a second aspect, this application provides an AP selection apparatus. The apparatus includes: a determining module, configured to determine a first AP in a plurality of APs based on neighbor relationships and/or path losses between the plurality of APs in a network, where the first AP is configured to provide, when the network enters a power-saving state, an association service for a terminal intending to access the network.

Optionally, the determining module is specifically configured to: determine an AP set based on the neighbor relationships and/or the path losses between the plurality of APs, where the AP set includes a plurality of candidate APs; and determine the first AP in the plurality of candidate APs based on terminal association features of the plurality of candidate APs, where a terminal association feature of any one candidate AP indicates a status of association between the any one candidate AP and a terminal.

Optionally, the determining module is configured to: determine, in the plurality of candidate APs based on the terminal association features of the plurality of candidate APs, an AP associated with a specified terminal; and determine the first AP based on the AP associated with the specified terminal.

Optionally, the apparatus further includes a control module, configured to: in a power-saving period of the network, control the network to enter the power-saving state, to enable the first AP to provide an association service for a terminal intending to access the network, and to enable at least one other AP to enter a power-saving state, where other AP is an AP other than the first AP in the plurality of APs.

Optionally, the control module is specifically configured to: adjust transmit power of the first AP, to enable signal coverage obtained by adjusting the transmit power of the first AP to cover signal coverage of the plurality of APs.

Optionally, the control module is further configured to: in the power-saving period, if a service trigger indication from a terminal is detected by an AP in the plurality of APs that does not enter a power-saving state, control the network to exit the power-saving state, to enable the plurality of APs to provide an association service for the terminal.

Optionally, the control module is further configured to: in the power-saving period, if duration in which the terminal continuously associates with a second AP reaches a first duration threshold, control the network to enter the power-saving state again, to enable the first AP to provide an association service for a terminal intending to access the network; and keep the second AP continuing to provide the association service for the terminal, to enable an AP other than the second AP in the at least one other AP to enter a power-saving state.

Optionally, the first AP is determined from the plurality of candidate APs, and the control module is further configured to: if the plurality of candidate APs include the second AP, update the second AP to the first AP.

Optionally, when no AP associated with a specified terminal exists in an AP other than the first AP in the plurality of APs, the at least one other AP includes all APs in the plurality of APs other than the first AP. When an AP associated with a specified terminal exists in an AP other than the first AP in the plurality of APs, the at least one other AP includes all APs in the plurality of APs other than the first AP and the AP associated with the specified terminal.

Optionally, an AP entering a power-saving state includes: A power supply of the AP is in an off state. Alternatively, the AP operates in a low power consumption mode, where power consumption of the AP in the low power consumption mode is lower than power consumption of the AP in a normal operating mode.

Optionally, the specified terminal has one or more of the following features: having no capability of actively associating with an AP, having no roaming capability, service load being greater than a load threshold, or duration of continuous association with an AP being greater than a second duration threshold.

Optionally, the control module is specifically configured to: when a moment of the network is in the power-saving period, if no roaming event occurs in the network within specified duration before the moment, control the network to enter the power-saving state.

Optionally, the first AP is determined from the plurality of APs based on centrality of each of the plurality of APs, and centrality of any one of the plurality of APs is obtained based on the neighbor relationships and/or the path losses between the plurality of APs.

Optionally, the centrality includes one or more of the following: degree centrality or closeness centrality.

Optionally, the first AP is determined from the plurality of APs based on an average path loss of each of the plurality of APs, and an average path loss of any one of the plurality of APs is obtained based on the path losses between the plurality of APs.

Optionally, the first AP is further determined from the plurality of APs based on an association preference degree of each of the plurality of APs, an association preference degree of any one of the plurality of APs is obtained based on a terminal association feature of the any one AP, and the terminal association feature of the any one AP indicates a status of association between the any one AP and a terminal.

Optionally, the terminal association feature of the any one AP includes one or more of the following: total duration in which a terminal associates with the any one AP, a total quantity of times that the any one AP provides association for a terminal, or a total quantity of terminals that have associated with the any one AP.

According to a third aspect, this application provides an AP selection device. The device may be a computing device or a network control device. The device includes a memory and a processor. The memory stores program instructions. The processor runs the program instructions to perform the method according to any one of the first aspect and the possible implementations of the first aspect in this application.

According to a fourth aspect, this application provides a computer-readable storage medium. The computer-readable storage medium is a non-volatile computer-readable storage medium. The computer-readable storage medium includes program instructions. When the program instructions are run on a computing device, the computing device is enabled to perform the method according to any one of the first aspect and the possible implementations of the first aspect in this application.

According to a fifth aspect, this application provides a computer program product including instructions. When the computer program product runs on a computer, the computer is enabled to perform the method according to any one of the first aspect and the possible implementations of the first aspect in this application.

## BRIEF DESCRIPTION OF DRAWINGS

FIG. 1 is a diagram of a topology of a network according to an embodiment of this application;
FIG. 2 is a diagram of another topology of a network according to an embodiment of this application;
FIG. 3 is a diagram of an application scenario according to an embodiment of this application;
FIG. 4 is a diagram of another application scenario according to an embodiment of this application;
FIG. 5 is a flowchart of an AP selection method according to an embodiment of this application;
FIG. 6 is a diagram of a topology group obtained through grouping based on neighbor relationships between a plurality of APs according to an embodiment of this application;
FIG. 7 is a flowchart of determining an AP set based on centrality of each of a plurality of APs according to an embodiment of this application;
FIG. 8 is a flowchart of determining an AP set based on an average path loss of each of a plurality of APs according to an embodiment of this application;
FIG. 9 is a flowchart of determining an AP set based on an association preference degree of each of a plurality of APs according to an embodiment of this application;
FIG. 10 is a diagram of an AP selection apparatus according to an embodiment of this application;
FIG. 11 is a diagram of another AP selection apparatus according to an embodiment of this application; and
FIG. 12 is a diagram of a structure of an AP selection device according to an embodiment of this application.

## DESCRIPTION OF EMBODIMENTS

To make the objectives, technical solutions, and advantages of this application clearer, the following further describes implementations of this application in detail with reference to the accompanying drawings.

For ease of understanding, the following first explains technologies and background in embodiments of this application.

Monitoring AP: When a network enters a power-saving state, the monitoring AP implements basic signal coverage of the network and can monitor an association behavior of a terminal.

Guarantee AP: In a process in which a network enters a power-saving state, the guarantee AP continues to provide an association service for a specified terminal, to ensure that a service of the specified terminal keeps running.

Power-saving AP: The power-saving AP is an AP in a plurality of APs that enters a power-saving state in a power-saving period, in other words, an AP other than a monitoring AP and a guarantee AP in the plurality of APs.

Path loss: The path loss is also referred to as a path loss or a path propagation loss, and is a loss caused by a transmission medium during transmission of a radio electromagnetic wave. A path loss between APs is a loss caused by a transmission medium during transmission of a radio electromagnetic wave between the APs. When an AP 1 transmits a signal to an AP 2, a path loss of a signal emitted by the AP 1 may be obtained based on transmit power of the AP 1 and strength of the signal received by the AP 2. For example, the path loss of the signal emitted by the AP 1 may be equal to a difference between the transmit power of the AP 1 and the strength of the signal received by the AP 2. The strength of the signal received by the AP 2 may be obtained based on a received signal strength indicator (received signal strength indicator, RSSI) of the signal received by the AP 2.

A neighbor relationship of APs includes: There is a neighbor relationship between the APs, or there is no neighbor relationship between the APs. In some implementations, the neighbor relationship between the APs may be obtained based on a path loss between the APs. When the path loss between the APs is less than a path loss threshold, it may be considered as that there is a neighbor relationship between the APs. When the path loss between the APs is greater than or equal to the path loss threshold, it may be considered as that there is no neighbor relationship between the APs.

A terminal association feature of any one AP indicates a status of association between the AP and a terminal. In an implementation, the terminal association feature of the any one AP may include one or more of the following: total duration in which a terminal associates with the AP, a total quantity of times that the AP provides association for a terminal, or a total quantity of terminals that have associated with the AP. Total duration in which a terminal associates with an AP is a sum, within a data statistics collection periodicity, of duration in which the AP associates with all terminals that have associated with the AP. One piece of association duration in which any one terminal associates with an AP is duration of one process of association between the terminal and the AP. Duration in which any one terminal associates with an AP is a sum, within a data statistics collection periodicity, of duration of each association between the terminal and the AP. A total quantity of times that an AP provides association for a terminal is a total quantity of times that the AP provides an association service for a terminal within a data statistics collection periodicity. A process in which an AP provides an association service for a terminal once includes: The terminal is associated with the AP until the terminal is disassociated with the AP. A total quantity of terminals that have associated with an AP is a total quantity, within a data statistics collection periodicity, of all terminals that have associated with the AP. In an implementation, the total quantity of terminals that have associated with the AP may be obtained through statistics collection based on an identifier of a terminal. The identifier of the terminal may be a media access control (media access control, MAC) address or an internet protocol (internet protocol, IP) address of the terminal.

Centrality (centrality) of an AP indicates a degree of centrality of the AP in an entire network. The centrality is also referred to as a centrality degree. The centrality can reflect an impact degree of the AP on signal quality in the network. Optionally, the centrality in embodiments of this application may include one or more of the following: degree centrality (also referred to as degree centrality (degree centrality, DC)) or closeness centrality (also referred to as closeness centrality or closeness centrality (closeness centrality, CC)).

The degree centrality is the most direct measurement indicator for describing the centrality in network analysis. Degree centrality of an AP is for measuring a degree of connectivity between the AP and another AP in a current network. The another AP is an AP other than the AP in a plurality of APs in the current network. If there is a neighbor relationship between two APs, it is considered as that the two APs are connected. If there is no neighbor relationship between two APs, it is considered as that the two APs are not connected. Therefore, a degree of connectivity between an AP and another AP in a current network may be understood as a proportion of a total quantity of other APs that have a neighbor relationship with the AP in the current network to a total quantity of APs in the current network. A higher degree of connectivity between the AP and another AP in the current network indicates higher degree centrality of the AP, and indicates that the AP is located at a more central position in the current network.

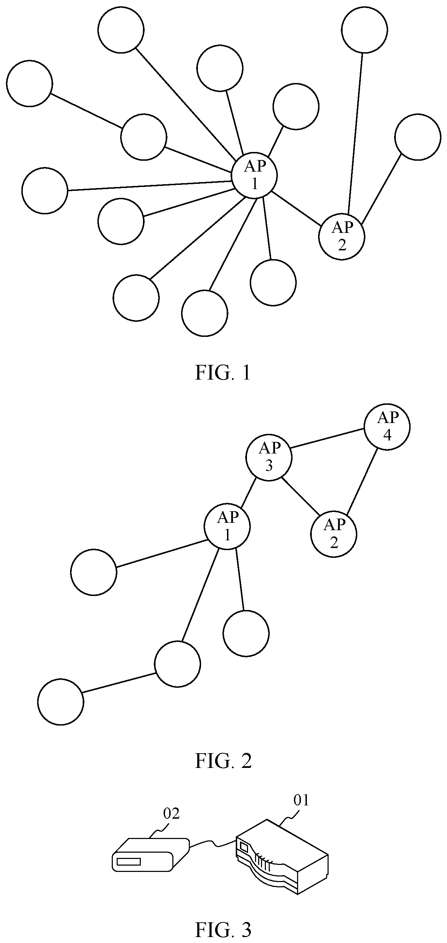

In some implementations, for a network having N APs, a value of degree centrality of any one AP in the network may be equal to a proportion of a total quantity of APs that are directly connected to the AP and that are in the remaining N-1 APs in the network to the total quantity of APs in the current network. Optionally, before degree centrality of an AP is obtained, a graph (graph) may be used to represent a topology between APs in a network, and then the degree centrality of the AP is obtained based on the graph. For example, FIG. 1 is a diagram of a graph of a network according to an embodiment of this application. In FIG. 1, a node represents an AP. An edge between two nodes indicates that there is a neighbor relationship between the two nodes, and no edge between two nodes indicates that there is no neighbor relationship between the two nodes. As shown in FIG. 1, the network includes 14 APs. In FIG. 1, an AP 1 is directly connected to 10 APs in the network, and in this case, a value of degree centrality of the AP 1 is 10/14. In FIG. 1, an AP 2 is directly connected to three APs in the network, and in this case, a value of degree centrality of the AP 2 is 3/14. It can be learned that the AP 1 is located at a more central position than the AP 2 in the network.

Closeness centrality is for measuring a degree of closeness between an AP and another AP in a network. The closeness centrality may be represented by an average length of shortest paths for signal transmission between the AP and all other APs. A smaller average length of the AP indicates higher closeness centrality of the AP, and indicates that the AP is located at a more central position in the network. When two APs are indirectly connected, the two APs may be connected through a plurality of paths, and the shortest path is a path with a smallest value assigned to measurement indicators of the plurality of paths. When the measurement indicator is a neighbor relationship, a value assigned to a measurement indicator of any path is a total quantity of neighbor relationships that the path passes through. When the measurement indicator is a path loss, a value assigned to a measurement indicator of any path is a sum of path losses between every two neighboring APs in all APs that the path passes through.

As shown in FIG. 2, an AP 1 and an AP 2 are indirectly connected, and there are two paths between the AP 1 and the AP 2, which are a path AP 1--AP 3--AP 2 and a path AP 1--AP 3- -AP 4--AP 2. Assuming that a measurement indicator is a neighbor relationship, it can be learned that a value assigned to a measurement indicator of the path AP 1--AP 3--AP 2 is 2, and a value assigned to a measurement indicator of the path AP 1--AP 3--AP 4--AP 2 is 3. In this case, the path AP 1--AP 3--AP 2 is the shortest path between the AP 1 and the AP 2. Optionally, before closeness centrality of an AP is obtained, a graph may be used to represent a topology between the APs in the network, and then the closeness centrality of the AP is obtained based on the graph.

In some implementations, for a network having N APs, a value $C_{ci}$ of closeness centrality of any $AP_i$ in the network may satisfy the following Formula 1, where $dis(i,j)$ in Formula 1 indicates a length of the shortest path for signal transmission between an AP i and an AP j.

$$Cci = \frac{N-1}{\sum_{j=1}^{N} dis(i,j)} \quad \text{(Formula 1)}$$

An association preference degree of an AP indicates a preference tendency for terminal association. A higher association preference degree of the AP indicates that a terminal tends to be associated with the AP. Optionally, the association preference degree of the AP may be obtained based on a terminal association feature of the AP. In an implementation, the association preference degree of the AP is in positive correlation with an indicator that reflects the terminal association feature of the AP. An implementation of the positive correlation may include: The association preference degree of the AP may be equal to a weighted sum of indicators that reflect the terminal association feature of the AP. For example, assuming that a terminal association feature of the any one AP includes: total duration in which a terminal associates with the AP, a total quantity of times that the AP provides association for a terminal, and a total quantity of terminals that have associated with the AP. An association preference degree of the AP is in positive correlation with the total duration, the total quantity of times, and the total quantity. For another example, when an association preference degree of an AP is obtained, total duration in which a terminal associates with the AP, a total quantity of times that the AP provides association for a terminal, and a total quantity of terminals that have associated with the AP may be obtained first. Then, a weighted sum of the total duration, the total quantity of times, and the total quantity is determined, and the weighted sum is defined as the association preference degree of the AP.

Embodiments of this application provide an AP selection method. In the method, a first AP is determined from a plurality of APs based on neighbor relationships and/or path losses between the plurality of APs in a network, so that the first AP provides, when the network enters a power-saving state, an association service for a terminal intending to access the network. Because the first AP is obtained based on the neighbor relationships and/or the path losses between the plurality of APs, and is not determined based on a terminal behavior, when the network enters the power-saving state, basic signal coverage of the network can be ensured by using the first AP, and a network use requirement can be ensured while burst service access is monitored, so that power saving can be implemented to a large extent while ensuring user experience.

FIG. 3 is a diagram of an application scenario according to an embodiment of this application. As shown in FIG. 3, the application scenario includes a network control device 01 and an AP 02 in a communication network. A communication connection is established between the network control device 01 and the AP 02. The communication network may be a data center network (data center network, DCN), a campus network, a virtual local area network (virtual local area network, VLAN), a virtual extensible local area network (virtual extensible local area network, VXLAN), or the like. A type of the communication network is not limited in embodiments of this application. It should be noted that quantities of network control devices 01 and APs 02 in FIG. 3 are merely used as examples, and are not used as a limitation on an application scenario related to the AP selection method provided in embodiments of this application. In this application scenario, the network control device 01 is configured to perform the AP selection method provided in embodiments of this application, to control the AP 02.

The network control device 01 is configured to manage the AP 02 in the communication network. The network control device 01 may be a core of a wireless network, and is responsible for managing all APs 02 in the wireless network. Management performed by the network control device 01 on the AP 02 includes: delivering a configuration to the AP 02, modifying a related configuration parameter of the AP 02, performing radio frequency management on the AP 02, performing security control on the AP 02, and the like. That the network control device 01 delivers the configuration to the AP 02 may include: configuring an operating mode, power, power-off time, and the like of the AP 02. That the network control device 01 performs the radio frequency management on the AP 02 may include: controlling a radio frequency module of the AP 02 to be enabled or disabled, or the like. The AP 02 is controlled to be powered off by turning off a main power supply of the AP 02, and the radio frequency module of the AP 02 is controlled to be disabled by turning off a power supply of the radio frequency module. In an implementation, the network control device 01 may be a network controller, a network management device, a gateway, or another device having a control capability. For example, the network control device 01 may be an access controller (Access Controller, AC).

The AP 02 is configured to provide wireless network coverage, and provide a wireless network association service for a terminal.

The network control device 01 may store information like a networking topology of the communication network managed by the network control device 01, a power-saving period of the AP 02 in the communication network, and a configuration (for example, transmit power, a bandwidth, and a channel of the AP 02) for the AP 02 to enter a power-saving state.

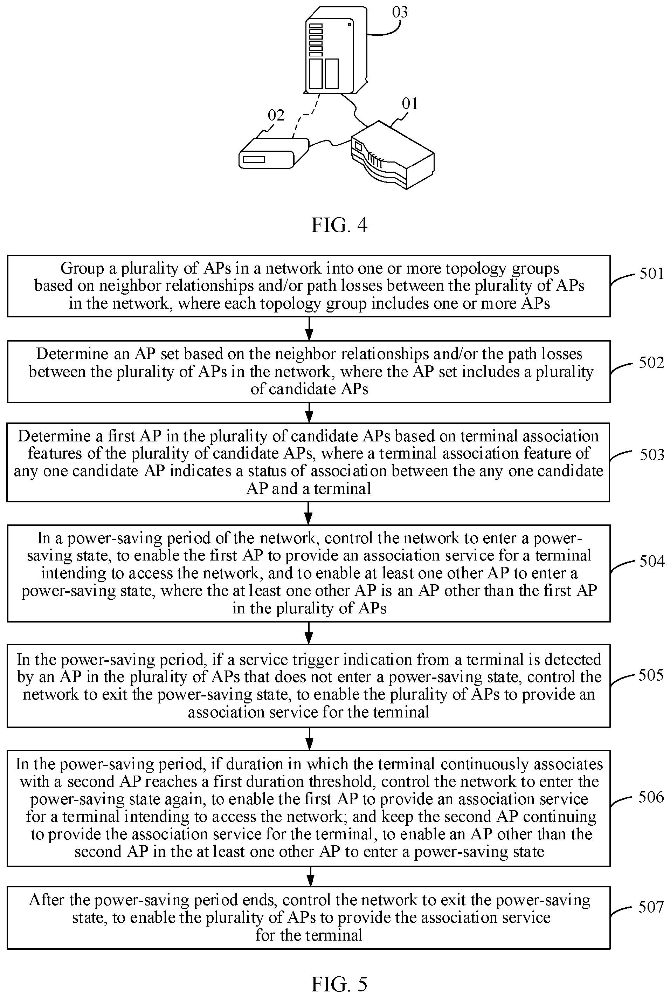

FIG. 4 is a diagram of another application scenario according to an embodiment of this application. As shown in FIG. 4, the application scenario includes a network control device 01, an AP 02, and a computing device 03. A communication connection is established between the computing device 03 and the network control device 01, and between the network control device 01 and the AP 02. Optionally, a communication connection may also be established between the computing device 03 and the AP 02. For implementations of the network control device 01, the AP 02, and the communication network in the application scenario, accordingly refer to related descriptions of the application scenario shown in FIG. 3. Details are not described herein again. In addition, quantities of network control devices 01 and APs 02 in FIG. 4 are merely used as examples, and are not used as a limitation on an application scenario related to the AP selection method provided in embodiments of this application.

In this application scenario, the computing device 03 can provide a computing capability. In an implementation, the computing device 03 is configured to determine a power-saving policy of the network, and provide the power-saving policy for the network control device 01, so that the network control device 01 performs power-saving control on the AP 02 according to the power-saving policy. For example, the computing device 03 is configured to determine a first AP in a plurality of APs 02 managed by the network control device 01, determine a power-saving period of the network, and provide information about the first AP and the power-saving period for the network control device 01, so that the network control device 01 performs power-saving control on the plurality of APs 02 in the network based on the information about the first AP and the power-saving period. Alternatively, the computing device 03 may directly provide a power-saving period for the AP 02 that needs to enter a power-saving state, so that the AP 02 enters the power-saving state based on the power-saving period. Optionally, the computing device 03 may be implemented by using one or more of a terminal, a physical machine, a cloud server, or a bare metal server. The computing device 03 may be understood as one device, or may be understood as a device cluster including a plurality of devices. The computing capability of the computing device may be implemented by the computing device 03 or software deployed on the computing device 03. For example, the computing capability may be implemented by a virtual machine, a container, or the like deployed on the computing device 03. In addition, when the computing device 03 is implemented by using the device cluster including a plurality of devices, the plurality of devices may be devices of a same type, or may be devices of different types. This is not specifically limited in embodiments of this application.

It should be understood that the foregoing content is descriptions of an example of an application scenario provided in embodiments of this application, and does not constitute a limitation on the application scenario. A person of ordinary skill in the art may learn that, as a service requirement changes, the application scenario may be adjusted based on an application requirement. Examples are not listed one by one in embodiments of this application.

The following describes an implementation process of the method by using an example in which an AC performs the AP selection method provided in embodiments of this application. As shown in FIG. 5, the implementation process of the AP selection method may include the following steps.

Step 501: Group a plurality of APs in a network into one or more topology groups based on neighbor relationships and/or path losses between the plurality of APs in the network, where each topology group includes one or more APs.

Before determining a first AP, the AC may first group the plurality of APs in the network into the one or more topology groups, and then determine the first AP in each topology group. In this way, power-saving control is implemented in topology groups. In an implementation, the AC may group the plurality of APs into the one or more topology groups based on the neighbor relationships and/or the path losses between the plurality of APs. Optionally, on this basis, the AC may further group the plurality of APs into the one or more topology groups with reference to information such as physical distances between the plurality of APs, radio (radio) data, and terminal association features. For descriptions of the neighbor relationship, the path loss, and the terminal association feature, accordingly refer to the descriptions in the foregoing content. Details are not described herein again. To facilitate grouping into topology groups based on a path loss, a path loss between an AP and the AP may be set to 0. In addition, in some scenarios, due to some factors, for example, when a loss of a signal is large in a transmission process or there is no neighbor relationship between two APs, a path loss may fail to be obtained through signal measurement. In this case, to facilitate grouping into topology groups based on a path loss, the path loss between the APs may be set to a specified value. For example, in consideration of a maximum value of a path loss that can be detected in the industry is 120 decibels milliwatts (dbm), the specified value may be 120 dbm currently. The radio data of the AP indicates a related feature of the AP, for example, transmit power.

In an implementation, the AC may group the plurality of APs into one or more independent topology groups based on the neighbor relationships and/or the path losses and the physical distances between the plurality of APs, the radio data, and the terminal association features by using a clustering algorithm like graph segmentation, graph compression, node compression, or clustering. During grouping into topology groups, a convergence condition of a grouping algorithm may be preset, to ensure that each topology group includes at least one AP, signal coverage of at least one other AP in each topology group can be adjusted, and signal coverage that is of the at least one other AP and that is obtained after the adjustment can cover signal coverage of all APs in the topology group in which the at least one other AP is located. Configuration information of the AP may indicate a capability of the AP. The AC may obtain, based on the configuration information of the AP, whether the AP has a capability that signal coverage of the AP can be adjusted. When determining whether signal coverage that is of an AP in any topology group and that is obtained after adjustment can cover signal coverage of all APs in the any topology group, the AC may first determine, based on a deployment position of an AP in an adjacent topology group, an AP (referred to as an edge AP for short below) that is located at a topology group edge of the adjacent topology group; determine a path loss between the AP in the any topology group and each edge AP; determine an ideal value of received signal strength of each edge AP for receiving a signal transmitted by the AP in the any topology group; obtain, with reference to the path loss and the ideal value of the received signal strength corresponding to each edge AP, an ideal value of transmit power needed for covering signal coverage of all the APs in the any topology group; and when an AP whose transmit power can reach the ideal value exists in the any topology group, determine that an AP whose signal coverage obtained after adjustment can cover the signal coverage of all the APs in the any topology group exists in the any topology group. The ideal value of the received signal strength may be determined based on an application requirement. For example, in some application scenarios, an RSSI needed by the AP to provide a high-quality association service is defined as at least -65 dbm, and in this case, the ideal value of the received signal strength may be -65 dbm. The ideal value of the transmit power may be obtained based on the ideal value of the received signal strength and the path loss. For example, the ideal value of the transmit power may be equal to a sum of the ideal value of the received signal strength and the path loss. When any topology group has a plurality of edge APs located in an adjacent group, a sum of a largest value of path losses of the plurality of edge APs and an ideal value of received signal strength may be determined as an ideal value of transmit power.

Optionally, to ensure quality of service provided by a topology group, a maximum quantity of APs included in each topology group may be further controlled. For example, when grouping into topology groups is performed by using the node compression algorithm, the node compression algorithm may be used in combination with greedy search, and a maximum compression ratio of each topology group is limited to 10, to limit a total quantity of APs included in each topology group to not exceed 10. In this way, even in a high-density AP deployment scenario, a topology group does not include more than 10 APs, to ensure signal coverage of a topology group when an AP in the topology group enters a power-saving state, so as to ensure an association success rate of a user.

It can be learned from the foregoing implementation process of grouping the plurality of APs into the one or more topology groups based on the neighbor relationships and/or the path losses between the plurality of APs that the process of grouping into topology groups is actually a process of grouping into topology groups based on the neighbor relationships and/or path losses obtained through signal detection between the APs. However, when the neighbor relationships and/or the path losses between the APs may fail to be obtained through signal detection or the obtained neighbor relationships and/or the path losses are not reliable enough, a topology group obtained through grouping based on the neighbor relationships and/or the path losses between the plurality of APs may have poor reasonableness. For example, if channels used when the APs obtain the neighbor relationships and/or the path losses through detection are different or there is a block (for example, a building block) between the APs and a device defect exists in the APs, the neighbor relationships and/or the path losses between the APs may fail to be obtained through signal detection. For another example, due to multipath superposition or path loss fluctuation, an obtained path loss is not reliable enough. Alternatively, when a path loss of an AP is close to a boundary value of an algorithm criterion used for grouping into topology groups, a topology group obtained through grouping based on the path losses between the plurality of APs has poor reasonableness. If the topology group has poor reasonableness, isolation between different topology groups is poor.

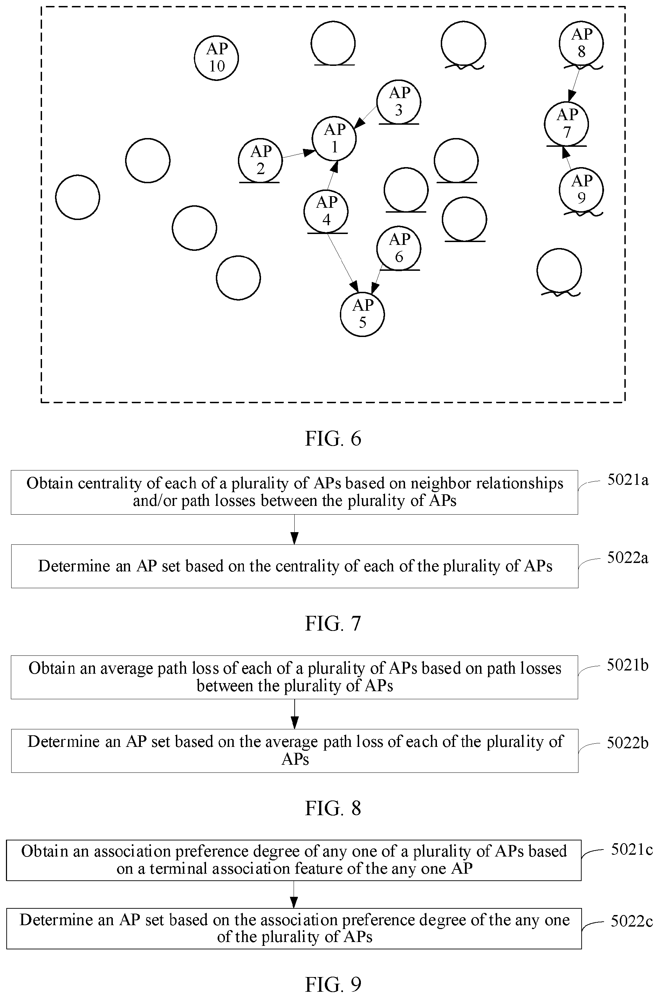

For example, FIG. 6 is a diagram of a topology group obtained through grouping based on neighbor relationships between a plurality of APs. Circles in FIG. 6 all represent APs. APs represented by circles without an underscore or a wavy line belong to a topology group 1. APs represented by circles with an underscore belong to a topology group 2. APs represented by circles with a wavy line belong to a topology group 3. When grouping into topology groups is performed based on the neighbor relationships between the plurality of APs, because an AP 1 has a strong signal sensing capability for an AP 10, the AP 1 is grouped into the topology group 1, and therefore, the AP 1 is located in the middle of a plurality of APs belonging to the topology group 2. Similarly, an AP 5 is grouped into the topology group 1, and the AP 7 is grouped into the topology group 2. It can be learned from a grouping result that different topology groups overlap each other, and isolation between different topology groups is poor. Therefore, it can be determined that the grouping result of the topology groups shown in FIG. 6 has poor reasonableness.

In view of this, grouping the plurality of APs into one or more topology groups may specifically include: grouping the plurality of APs into one or more initial topology groups; and optimizing the one or more initial topology groups, to obtain the one or more topology groups. For an implementation process of grouping the plurality of APs into the one or more initial topology groups, accordingly refer to the foregoing implementation process of grouping the plurality of APs into the one or more topology groups. In other words, the topology group obtained through grouping in the foregoing process is the initial topology group herein. When optimizing the initial topology group, the AC may obtain an initial topology group to which each of the plurality of APs belongs, and determine, based on an initial topology group to which one or more reference APs deployed around any one AP belong and a weight of the one or more reference APs for the any one AP, an initial topology group corresponding to a larger weight as an optimized topology group to which the any one AP belongs, to obtain one or more optimized topology groups. In an implementation, the reference AP may be any AP deployed around the any one AP, or may be an AP deployed around the any one AP and satisfying a specified condition. Optionally, when path losses between the APs can be obtained, the specified condition may indicate that a path loss between the any one AP and the reference AP is less than a specified threshold, or when path losses between all APs deployed around the any one AP and the any one AP are sorted in ascending order, the specified condition may indicate that a path loss between the reference AP and the any one AP is ranked in the first specified quantity of a sorting result. A weight of a reference AP for an AP indicates a closeness degree of a neighbor relationship between the reference AP and the AP. Weights of a plurality of reference APs for an AP may be obtained through sorting of path losses between the plurality of reference APs and the AP. For example, when the path losses between all the APs deployed around the any one AP and the any one AP are sorted in ascending order, and the path losses between the plurality of reference APs and the any one AP are ranked in the first specified quantity of the sorting result, a specified quantity of weights may be pre-determined, and the specified quantity of weights are sequentially allocated, in descending order of the weights, to the plurality of reference APs corresponding to the path losses in ascending order. For example, it is assumed that an AP in a to-be-optimized initial topology group is an AP 0, reference APs are an AP 1, an AP 2, an AP 3, and an AP 4, and path losses between the AP 1, the AP 2, the AP 3, and the AP 4 and the AP 0 increase sequentially. Four pre-determined weights are 0.39, 0.31, 0.2, and 0.1. In this case, 0.39 may be determined as a weight of the AP 1, 0.31 may be determined as a weight of the AP 2, 0.2 may be determined as a weight of the AP 3, and 0.1 may be determined as a weight of the AP 4. It is assumed that initial topology groups of the AP 1, the AP 2, the AP 3, and the AP 4 are an initial topology group 1, an initial topology group 2, an initial topology group 1, and an initial topology group 3 respectively. Because a weight corresponding to the initial topology group 1 is 0.39+0.2=0.59, a weight corresponding to the initial topology group 2 is 0.31, and a weight corresponding to the initial topology group 3 is 0.1, the initial topology group 1 may be determined as an optimized topology group to which the AP 0 belongs. It should be noted that the optimization process may be a multi-round iteration process, and a convergence condition of the multi-round iteration process may be that grouping results of all APs do not change after optimization.

It can be learned from the foregoing descriptions that a process of optimizing a topology group to which an AP belongs is actually determining, based on a weight of one or more reference APs for an AP in a to-be-optimized group and an initial topology group to which the one or more reference APs belong, a topology group to which the AP in an optimized to-be-optimized group belongs. In this case, it is equivalent to determining a group of the AP based on an initial topology group to which an AP having a closer neighbor relationship with the AP in the to-be-optimized group belongs. For example, as shown in FIG. 6, after APs around the AP 1, the AP 5, and the AP 7 are screened based on a specified condition, it may be obtained that reference APs for optimizing an initial topology group to which the AP 1 belongs are the AP 2, the AP 3, and the AP 4, reference APs for optimizing an initial topology group to which the AP 5 belongs are the AP 4 and the AP 6, and reference APs for optimizing an initial topology group to which the AP 7 belongs are the AP 8 and the AP 9. After topology grouping is optimized, it may be learned that the AP 1 belongs to the topology group 2, the AP 5 belongs to the topology group 2, and the AP 7 belongs to the topology group 3. After optimization, the topology group to which the AP 1 belongs is an initial topology group to which an AP having a closer neighbor relationship with the AP 1 belongs. After optimization, the topology group to which the AP 5 belongs is an initial topology group to which an AP having a closer neighbor relationship with the AP 5 belongs. After optimization, the topology group to which the AP 7 belongs is an initial topology group to which an AP having a closer neighbor relationship with the AP 7 belongs. By optimizing the topology groups in this manner, the neighbor relationships between the APs in the optimized topology groups can be closer, and the neighbor relationships between the APs in different topology groups after optimization are relatively separated. In this way, isolation between the optimized topology groups can be effectively ensured.

It should be noted that a total quantity of topology groups may be adaptively obtained in a grouping process. In an implementation, the total quantity of topology groups may be determined based on maximum signal coverage of a single AP and a size of an area that needs to be covered by signals of a plurality of APs. For example, when signal coverage of the plurality of APs is small, the total quantity of topology groups may be one, and in this case, it may alternatively be considered as that the plurality of APs do not need to be grouped. When the signal coverage of the plurality of APs is large, the total quantity of topology groups may be greater. In addition, step 501 may be an optional execution step. In an actual process, whether to perform step 501 may be determined based on an application requirement. For example, when coverage of the network is small, or before the AP selection method provided in embodiments of this application is performed, if a topology group is obtained through grouping in advance, step 501 may not be performed.

Step 502: Determine an AP set based on the neighbor relationships and/or the path losses between the plurality of APs in the network, where the AP set includes a plurality of candidate APs.

When the plurality of APs in the network are grouped into a plurality of topology groups, an implementation process of step 502 is: determining an AP set based on neighbor relationships and/or path losses between a plurality of APs in any topology group. The following describes the implementation process of step 502 based on determining an AP set based on neighbor relationships and/or path losses between a plurality of APs in one topology group. There may be a plurality of implementations. The following uses the following three implementations as examples for description.

In the first implementation, the candidate APs may be determined from the plurality of APs based on centrality of each of the plurality of APs. Centrality of any one of the plurality of APs is obtained based on neighbor relationships and/or path losses between the plurality of APs. As shown in FIG. 7, determining the candidate APs in the plurality of APs based on the neighbor relationships and/or the path losses between the plurality of APs in the network includes step 5021a and step 5022a.

Step 5021a: Obtain the centrality of each of the plurality of APs based on the neighbor relationships and/or the path losses between the plurality of APs.

In obtaining the centrality of the AP, the centrality of the AP may be directly determined based on the neighbor relationship of the AP. Alternatively, the neighbor relationship of the AP may be determined based on the path loss of the AP, and then the centrality of the AP is determined based on the neighbor relationship. For an implementation of determining the neighbor relationship based on the path loss, a definition of the centrality, and an implementation of determining the centrality, accordingly refer to related descriptions in the foregoing content. Details are not described herein again.

Step 5022a: Determine the AP set based on the centrality of each of the plurality of APs.

After the centrality of each of the plurality of APs in the network is determined, the candidate APs may be determined from the plurality of APs based on the centrality of each AP, to obtain the AP set. The first AP is determined from the candidate APs, and the first AP is configured to implement basic signal coverage after a power-saving AP in the plurality of APs enters a power-saving state. To ensure network use experience of a user, after the power-saving AP in the plurality of APs enters the power-saving state, signal coverage of the first AP needs to cover original signal coverage of the power-saving AP. Therefore, an AP with good centrality in the plurality of APs may be determined as a candidate AP. Good centrality includes high degree centrality and high closeness centrality. In this case, the AC may select, from the plurality of APs, an AP whose degree centrality is higher than a degree centrality threshold, select, from APs whose degree centrality is higher than the degree centrality threshold, an AP whose closeness centrality is greater than a closeness centrality threshold, and determine the selected AP as the candidate AP. When degree centrality of an AP is high, in comparison with an AP with low degree centrality, the AP with high degree centrality can implement signal coverage in a large range, to help reduce signal coverage holes in a power saving process, and ensure an association success rate of a terminal. Higher closeness centrality of an AP indicates a shorter average length of the shortest path for signal transmission between the AP and all other APs, so that attenuation of signals transmitted between the AP and other APs is small, to ensure signal quality and the network use experience of the user. The power-saving AP is an AP that enters the power-saving state in the plurality of APs in a power-saving period. The power-saving AP does not provide signal coverage in the power-saving period, and is in a state of waiting for wake-up. After the power-saving AP enters the power-saving state, because the first AP is configured to implement the basic signal coverage and can monitor an association behavior of the terminal, the first AP is also referred to as a monitoring AP.

In the second implementation, the candidate APs may be determined from the plurality of APs based on an average path loss of each of the plurality of APs. An average path loss of any one of the plurality of APs is obtained based on the path losses between the plurality of APs. As shown in FIG. 8, determining the candidate APs in the plurality of APs based on the neighbor relationships and/or the path losses between the plurality of APs in the network includes step 5021b and step 5022b.

Step 5021b: Obtain the average path loss of each of the plurality of APs based on the path losses between the plurality of APs.

An average path loss of any one AP is an average value of path losses between the AP and all other APs in the plurality of APs in the network. In an implementation, a sum of path losses from any one AP to all remaining APs in the plurality of APs may be first obtained, and then a quotient of the sum and a total quantity of the remaining APs is determined as the average path loss of the any one AP.

Step 5022b: Determine the AP set based on the average path loss of each of the plurality of APs.

After the average path loss of each of the plurality of APs is determined, the candidate APs may be determined from the plurality of APs based on the average path loss of each of the plurality of APs, to obtain the AP set. The first AP is determined from the candidate APs, and the first AP is configured to implement basic signal coverage after a power-saving AP in the plurality of APs enters a power-saving state. To ensure network use experience of a user, after the power-saving AP in the plurality of APs enters the power-saving state, signal coverage of the first AP needs to cover original signal coverage of the power-saving AP. Therefore, an AP with a small average path loss in the plurality of APs may be determined as a candidate AP. Because access signal strength is equal to a difference between transmit power and a path loss, for different APs, in a case of same transmit power, when an average path loss of an AP is small, a larger average value of access signal strength of signals of the AP that are received by all other APs in the plurality of APs indicates better signal coverage capability of the AP, for example, evener signal coverage and a larger effective area. The AP with a small average path loss in the plurality of APs is determined as the candidate AP, so that the first AP better covers original coverage of other APs in the plurality of APs, to ensure an association success rate of the user.

In the third implementation, in addition to determining the candidate APs in the plurality of APs based on the neighbor relationships and/or the path losses between the plurality of APs, the candidate APs may alternatively be obtained based on an association preference degree of each of the plurality of APs. As shown in FIG. 9, determining the candidate APs in the plurality of APs based on the association preference degree of each of the plurality of APs in the network includes step 5021c and step 5022c.

Step 5021c: Obtain an association preference degree of any one of the plurality of APs based on a terminal association feature of the any one AP.

For definitions of the terminal association feature and the association preference degree, and an implementation of obtaining the association preference degree of the any one AP based on the terminal association feature of the any one AP, accordingly refer to related descriptions in the foregoing content. Details are not described herein again.

Step 5022c: Determine the AP set based on the association preference degree of the any one of the plurality of APs.

The first AP is determined from the candidate APs, and the first AP is configured to implement basic signal coverage after a power-saving AP in the plurality of APs enters a power-saving state. To ensure network use experience of a user, after the power-saving AP in the plurality of APs enters the power-saving state, signal coverage of the first AP needs to cover original signal coverage of the power-saving AP. Therefore, an AP with a high association preference degree in the plurality of APs may be determined as a candidate AP. When an association preference degree of an AP is higher, a terminal tends to associate with the AP, and a terminal that needs to associate with the AP in a power-saving period is more likely to associate with the AP. In this case, the AP may be determined as the candidate AP, so that the AP provides an association service for the terminal in the power-saving period.

Further, the candidate APs may be determined from the plurality of APs with reference to association preference degrees of the plurality of APs and the neighbor relationships and/or the path losses between the plurality of APs. In an implementation, the plurality of candidate APs may be first determined from the plurality of APs based on the neighbor relationships and/or the path losses between the plurality of APs, and then the plurality of candidate APs are screened based on association preference degrees, to obtain one or more selected candidate APs, so as to obtain an AP set of the one or more candidate APs. For example, when the candidate APs are determined with reference to the association preference degrees of the plurality of APs and the neighbor relationships and/or the path losses between the plurality of APs, a plurality of candidate APs may be first determined from the plurality of APs based on the first implementation and/or the second implementation, then the plurality of candidate APs are screened based on association preference degrees, and selected candidate APs are determined as the final candidate APs. Optionally, based on the first implementation and the second implementation, when the plurality of candidate APs are determined from the plurality of APs, a plurality of candidate APs may be first determined based on the first implementation, and the plurality of candidate APs are screened based on the second implementation, to obtain a plurality of candidate APs that are to be screened based on association preference degrees.

For an implementation process of determining the plurality of candidate APs in the plurality of APs based on the neighbor relationships and/or the path losses between the plurality of APs, accordingly refer to the foregoing descriptions of the first and second implementations.

The candidate APs are determined based on the centrality and/or the average path loss, so that a candidate AP with a good signal coverage capability in current network planning deployment may be selected from the plurality of APs. When the first AP is determined based on the candidate APs, this helps ensure a signal coverage capability of the first AP for original signal coverage of the plurality of APs, and ensure the association success rate of the terminal when the network enters a power-saving state. The candidate APs are determined based on the terminal association features of the APs, so that impact of a network use behavior of the terminal on a process of selecting the candidate APs is considered, and the candidate APs can be determined based on the network use behavior of the terminal. When the first AP is determined based on the candidate APs, this helps ensure a capability of the first AP for providing, in the power-saving period, an association service for a terminal intending to access the network.

Step 503: Determine the first AP in the plurality of candidate APs based on the terminal association features of the plurality of candidate APs, where a terminal association feature of any one candidate AP indicates a status of association between the any one candidate AP and a terminal.

All candidate APs in the AP set satisfy a condition for being the first AP. In the power-saving period, the first AP is configured for signal coverage, there is a high probability that an AP other than the first AP in the plurality of APs enters a power-saving state, and an AP in a power-saving state cannot provide the association service for the terminal. Therefore, the plurality of candidate APs may be screened with reference to the terminal association features of the plurality of candidate APs to obtain the first AP, to ensure the capability of the first AP for providing, in the power-saving period, the association service for the terminal. In consideration of features of some specified terminals, if switching of APs associated with the specified terminals may affect service implementation of the terminals, for example, cause service interruptions of the specified terminals, candidate APs associated with the specified terminals may be determined from the plurality of candidate APs based on the terminal association features of the plurality of candidate APs, and the first AP is determined based on the candidate APs associated with the specified terminals. In an implementation, the terminal association features of the candidate APs can reflect terminals associated with the candidate APs. When a terminal association feature of only one candidate AP in the plurality of candidate APs indicates that a terminal associated with the candidate AP includes a specified terminal, the candidate AP associated with the specified terminal may be determined as the first AP. In another implementation, in the foregoing process of determining the candidate APs based on any screening indicator including the centrality, the average path losses, or the association preference degrees, the plurality of candidate APs may be further sorted based on the screening indicator, and then a candidate AP that is associated with a specified terminal and that is ranked in the front is determined as the first AP. The plurality of candidate APs are sorted in descending order of the centrality. The plurality of candidate APs are sorted in ascending order of the average path losses. The plurality of candidate APs are sorted in descending order of the association preference degrees. In a process of determining the candidate APs based on at least two screening indicators of the centrality, the average path losses, and the association preference degrees, priorities of sorting the at least two screening indicators in descending order are the centrality, the average path losses, and the association preference degrees. In addition, after the sorting is performed based on a previous indicator, a plurality of candidate APs with a same rank are sorted based on another screening indicator only when the plurality of candidate APs with a same rank exist in a sorting result. In addition, when sorting is performed based on the centrality, and the centrality includes degree centrality and closeness centrality, sorting may be performed preferentially based on degree centrality, and then a plurality of candidate APs that are with a same rank after sorting is performed based on the degree centrality are sorted based on closeness centrality.

The specified quantity may be determined based on a candidate item and the signal coverage of the plurality of APs in the network. For example, when a candidate AP that is ranked first in the plurality of candidate APs is associated with a specified terminal, and signal coverage of the candidate AP can cover the original signal coverage of the plurality of APs, the specified quantity is one, and the candidate AP that is ranked first may be determined as the first AP. For another example, when a candidate AP that is ranked first in the plurality of candidate APs is associated with a specified terminal, and signal coverage of the candidate AP that is ranked first superimposed on signal coverage of a candidate AP that is ranked second can cover the original signal coverage of the plurality of APs, the specified quantity is two, and both the candidate AP that is ranked first and the candidate AP that is ranked second may be determined as the first AP. The specified terminal associated with the candidate AP herein may be a specified terminal associated with the candidate AP within specified duration before the power-saving period.

A candidate AP associated with a specified terminal is determined as the first AP, so that the first AP can be used to continue to provide the association service for the specified terminal in the power-saving period. Because the first AP is configured to guarantee that a service of the specified terminal continues to run in the power-saving period, the first AP is also referred to as a guarantee AP. Because the first AP is further configured to implement the basic signal coverage in the power-saving period, and the first AP is also referred to as a monitoring AP, the monitoring AP determined in this case may be considered as a monitoring AP that is reused as the guarantee AP. The guarantee AP is reused as the monitoring AP, so that a total quantity of APs that need to be enabled in the power-saving period can be further reduced while ensuring service implementation of the user, to further improve power-saving benefits. It should be noted that, when a plurality of APs associated with the specified terminal exist in the plurality of APs, in addition to reusing the guarantee AP used as the first AP, a remaining AP in the plurality of APs associated with the specified terminal may be used as the guarantee AP in the power-saving period, to ensure that the service of the specified terminal continues to run.

Optionally, the specified terminal may be a terminal associated with an AP that cannot or is not suitable to be switched after the specified terminal is associated with the AP, and/or a terminal with heavy service load. In an implementation, the specified terminal has one or more of the following features: having no capability of actively associating with an AP, having no roaming capability, service load being greater than a load threshold, or duration of continuous association with an AP being greater than a second duration threshold. For example, the specified terminal may be an internet of things (internet of things, IOT) terminal, a big service terminal, or a silent terminal. The IoT terminal cannot roam and cannot actively associate with an AP. Switching an AP associated with the IoT terminal causes service interruption of the IoT terminal. Service load of the big service terminal is greater than the load threshold. Switching an AP associated with the big service terminal may cause service interruption of the big service terminal, and may cause congestion on an associated AP that is switched to, affecting performance of the AP that is switched to. After the silent terminal is associated with an AP, duration of continuous association with the AP is greater than a duration threshold, and no roaming occurs within specified duration. In view of this, it may be predicted that there is a high probability that the silent terminal implements a service by using the associated AP, and the AP continuously associated with the silent terminal is usually an AP that can improve a high-quality association service for the silent terminal. If the AP associated with the silent terminal is switched, the quality of the association service provided by an AP that is switched to for the silent terminal may be degraded, affecting service implementation of the silent terminal. In an implementation, whether the terminal associated with the AP is a specified terminal may be determined by performing type identification on the terminal. For example, information such as data for reflecting a historical behavior of the terminal, an application packet reported by the terminal, and vendor information may be obtained, and then type identification is performed on the terminal based on the information.

It should be noted that when none of the plurality of candidate APs is associated with the specified terminal, the first AP may be determined from the plurality of candidate APs based on the sorting result of the plurality of candidate APs. For example, a candidate AP that is ranked first may be determined as the first AP. For example, it is assumed that a quantity of first APs needed in a topology group is one, and a sorting result of a plurality of candidate APs of the first AP is: AP 1>AP 4>AP 7. For different cases of a guarantee AP, for the determined first AP and a non-power-saving AP that needs to be continuously enabled in the power-saving period, refer to Table 1. As shown in the second row of Table 1, when no guarantee AP needs to be set, the AP 1 may be determined as the first AP, and in this case, the non-power-saving AP is the AP 1. As shown in the third row of Table 1, when the AP 1, the AP 4, and the AP 5 need to be set as guarantee APs, the AP 1 may be reused as a guarantee AP and a monitoring AP, that is, the AP 1 is determined as the first AP. In this case, non-power-saving APs are the AP 1, the AP 4, and the AP 5.

Table 1

| Guarantee AP | First AP | Non-power-saving AP |
|---|---|---|
| None | AP 1 | AP 1 |
| AP 1, AP 4, and AP 5 | AP 1 | AP 1, AP 4, and AP 5 |
| AP 4, AP 8, and AP 9 | AP 4 | AP 4, AP 8, and AP 9 |
| AP 2 and AP 3 | AP 1 | AP 1, AP 2, and AP 3 |

It should be noted that, when the first AP is determined, a process of determining the candidate APs may alternatively not be performed. To be specific, the first AP may be directly determined from the plurality of APs based on the neighbor relationships and/or the path losses between the plurality of APs. In this case, for an implementation process of first determining the plurality of candidate APs and then determining the first AP in the plurality of candidate APs, reference may be made to a process of determining the candidate APs in the plurality of APs, and the plurality of APs are sorted based on indicators for determining the candidate APs. For example, the plurality of candidate APs are sorted in descending order of the centrality, in ascending order of the average path losses, and in descending order of the association preference degrees. Then, an AP that is ranked first is used as the first AP.

Step 504: In the power-saving period of the network, control the network to enter the power-saving state, to enable the first AP to provide an association service for a terminal intending to access the network, and to enable at least one other AP to enter a power-saving state, where another AP is an AP other than the first AP in the plurality of APs.

After the first AP is determined from the plurality of APs, operating states of the plurality of APs may be controlled in the power-saving period of the network, to control the network to enter the power-saving state. An implementation may include: in the power-saving period of the network, controlling the first AP to provide the association service for the terminal intending to access the network, and controlling the at least one other AP to enter the power-saving state. The power-saving period may be an idle period that is of the network and that is predicted by an analyzer or the AC, or the power-saving period is a manually specified non-operating period of the network.

In a possible implementation, controlling the first AP to provide the association service for the terminal intending to access the network includes: adjusting transmit power of the first AP, to enable signal coverage obtained by adjusting the transmit power of the first AP to cover the signal coverage of the plurality of APs. Optionally, the signal coverage of the plurality of APs may be determined first, and then the transmit power of the first AP is adjusted, to enable the signal coverage obtained by adjusting the transmit power of the first AP to cover the signal coverage of the plurality of APs. For an implementation of determining the transmit power that can be for covering the signal coverage of the plurality of APs, accordingly refer to the implementation of determining the ideal value of the transmit power needed for covering signal coverage of all APs in any topology group in step 501. Alternatively, when the plurality of APs are grouped into a plurality of topology groups, because adjacent topology groups use different channels and no interference is generated between the adjacent topology groups, transmit power of first APs in all topology groups may be further adjusted to maximum power supported by the corresponding first APs. In this way, the first AP can be used to implement basic coverage of the network, and a function of monitoring terminal association is implemented.

In a possible implementation, when no AP associated with a specified terminal exists in an AP other than the first AP in the plurality of APs, the at least one other AP includes all APs in the plurality of APs other than the first AP. When an AP associated with a specified terminal exists in an AP other than the first AP in the plurality of APs, the at least one other AP includes all APs in the plurality of APs other than the first AP and the AP associated with the specified terminal. In this case, controlling the at least one other AP to enter the power-saving state includes: when no AP associated with the specified terminal exists in the AP other than the first AP in the plurality of APs, controlling all the APs in the plurality of APs other than the first AP to enter a power-saving state; or when an AP associated with the specified terminal exists in the AP other than the first AP in the plurality of APs, controlling all the APs in the plurality of APs other than the first AP and the AP associated with the specified terminal to enter the power-saving state, and keeping an operating state of the AP associated with the specified terminal unchanged. Keeping the operating state of the AP associated with the specified terminal unchanged may be implemented by keeping transmit power of the AP associated with the specified terminal unchanged.

Optionally, that the AP enters the power-saving state may include: A power supply of the AP is in an off state, or the AP operates in a low power consumption mode. Power consumption of the AP in the low power consumption mode is lower than power consumption of the AP in a normal operating mode. In an implementation, the AP may be controlled to enter the low power consumption mode in manners such as turning off a power supply of a radio frequency module of the AP, disabling a radio frequency transmit and receive channel, and reducing a quantity of antennas configured to receive and transmit a signal. When the AP is controlled to enter the low power consumption mode, transmit power of the AP may be further reduced, so that the AP does not generate signal coverage.

Optionally, before the network is controlled to enter the power-saving state, a network status may be further determined, to determine whether the network needs to be controlled to enter the power-saving state. For example, when a moment of the network is in the power-saving period, if no roaming event occurs in the network within specified duration before the current moment, the network may be controlled to enter the power-saving state. In this way, it can be ensured that a condition for the network to enter the power-saving state is that no terminal having a roaming behavior exists in the network, to ensure that a service of the terminal is not affected when the network enters the power-saving state, and avoid network oscillation caused by frequent switching of the power-saving state due to the roaming behavior.

It should be noted that, for the power-saving AP in the plurality of APs, before the network enters the power-saving state, the AC may actively switch a terminal associated with the power-saving AP from the power-saving AP to a monitoring AP or a guarantee AP. For example, before controlling the power-saving AP to enter the power-saving state, the AC may guide, in a manner like load migration, the terminal associated with the power-saving AP to be associated with the monitoring AP or the guarantee AP, and control the power-saving AP to enter the power-saving state after switching the terminal associated with the power-saving AP to be associated with the monitoring AP or the guarantee AP. Alternatively, after determining that the network needs to be controlled to enter the power-saving state, the AC may control the power-saving AP to directly enter the power-saving state. When detecting a signal change caused by the power-saving AP entering the power-saving state, the terminal may disassociate from the currently associated power-saving AP, and re-associate with the monitoring AP or the guarantee AP.

The terminal associated with the power-saving AP is switched from the power-saving AP to the monitoring AP or the guarantee AP, so that it can be ensured that the terminal associated with the power-saving AP continues to implement a service. In addition, when the terminal associated with the power-saving AP is switched to the guarantee AP, the guarantee AP can be used to share load for the monitoring AP, so as to reduce load pressure of the monitoring AP.

Step 505: In the power-saving period, if a service trigger indication from a terminal is detected by an AP in the plurality of APs that does not enter a power-saving state, control the network to exit the power-saving state, to enable the plurality of APs to provide an association service for the terminal.

In the power-saving period, if the service trigger indication from the terminal is detected by the AP in the plurality of APs that does not enter the power-saving state, it indicates that a user using the terminal may have a service requirement. The AP that does not enter the power-saving state may include the monitoring AP or the guarantee AP in the network. In this case, the AC may control the network to exit the power-saving state. In an implementation, when the first AP detects a behavior of successfully associating the terminal with the first AP, and/or the monitoring AP and/or the guarantee AP in the network detect/detects that the associated terminal has a roaming behavior or a possible roaming behavior, it may be determined that the service trigger indication from the terminal is detected by the AP in the plurality of APs that does not enter the power-saving state. Optionally, an association log of the AP may be viewed. When the association log shows that the AP associated with the terminal changes, it may be determined that the terminal has the roaming behavior. Optionally, if the monitoring AP and/or the guarantee AP detect/detects that a change value of an RSSI of the associated terminal in a current detection time window relative to an RSSI in a previous detection time window exceeds a threshold, it may be determined that the associated terminal has a possible roaming behavior.

That the AC controls the network to exit the power-saving state may include adjusting operating states of the at least one other AP and the first AP to a normal operating state. The AC or the AP records information existed when the AP is in the normal operating state. After receiving an instruction from the AC and indicating to adjust the operating state of the AP to the normal operating state, the AP may query, in the AP or the AC, the information existed when the AP is in the normal operating state, and adjust the operating state of the AP to the normal operating state based on the queried information. In an implementation, when the operating state of the first AP is adjusted, by increasing the transmit power of the first AP, to an operating state that is in the power-saving state, the operating state of the first AP may be adjusted to the normal operating state by reducing the transmit power of the first AP. In this case, information existed when the first AP is in the normal operating state includes transmit power of the first AP in the normal operating state. When the at least one other AP is controlled to enter the power-saving state by turning off a power supply of the at least one other AP, the operating state of the at least one other AP may be adjusted to the normal operating state by turning on the power supply of the at least one other AP. When the at least one other AP is controlled to enter the power-saving state by turning off a power supply of the radio frequency module of the AP, the operating state of the at least one other AP may be adjusted to the normal operating state by turning on the turned-off power supply of the radio frequency module. In this case, the information existed when the AP is in the normal operating state includes information about the disabled radio frequency module. When the at least one other AP is controlled to enter the power-saving state by disabling a radio frequency transmit and receive channel, the operating state of the at least one other AP may be adjusted to the normal operating state by enabling the disabled transmit and receive channel. In this case, the information existed when the AP is in the normal operating state includes information about the disabled transmit and receive channel. When the at least one other AP is controlled to enter the power-saving state by reducing a quantity of antennas configured to receive and transmit a signal, the operating state of the at least one other AP may be adjusted to the normal operating state by increasing the reduced quantity of antennas configured to receive and transmit a signal. In this case, the information existed when the AP is in the normal operating state includes the reduced quantity of antennas configured to receive and transmit a signal.

Step 506: In the power-saving period, if duration in which the terminal continuously associates with a second AP reaches a first duration threshold, control the network to enter the power-saving state again, to enable the first AP to provide an association service for a terminal intending to access the network; and keep the second AP continuing to provide the association service for the terminal, to enable an AP other than the second AP in the at least one other AP to enter a power-saving state.

In the power-saving period, if the duration in which the terminal continuously associates with the second AP reaches the first duration threshold, it indicates that there is a high probability that the terminal uses, in a long period of time, a network provided by the second AP, instead of using a network provided by another AP. In this case, the network may be controlled to perform power saving again. In addition, in the process of controlling the network to perform power saving again, the first AP may continue to be controlled to provide the association service for the terminal intending to access the network, the second AP may continue to provide the association service for the terminal, and an AP other than the second AP in the at least one other AP may be controlled to enter the power-saving state.

When the first AP is determined from the plurality of candidate APs, before the network is controlled to perform power saving again, an implementation process may further include: determining whether the plurality of candidate APs include the second AP; and if the plurality of candidate APs include the second AP, updating the second AP to the first AP. Updating the second AP to the first AP means switching the second AP to the first AP, and switching an original first AP to the power-saving AP, where the original first AP is also a candidate AP of the first AP. In this case, an implementation process of controlling the first AP again to provide the association service for the terminal intending to access the network, and controlling an AP other than the second AP to enter the power-saving state is actually: controlling the second AP to provide an association service for a terminal intending to access the network, and controlling the AP other than the second AP and the original first AP to enter the power-saving state. Controlling the second AP to provide the association service for the terminal intending to access the network may be implemented by controlling transmit power of the second AP. Similarly, controlling the AP to enter the power-saving state may also be implemented by controlling transmit power of the corresponding AP.

Step 507: After the power-saving period ends, control the network to exit the power-saving state, to enable the plurality of APs to provide the association service for the terminal.

When the power-saving period ends, it indicates that the network needs to enter an operating period. In this case, the network may be controlled to exit the power-saving state, to enable the plurality of APs to provide the association service for the terminal.

In conclusion, in the AP selection method provided in embodiments of this application, the first AP can be determined from the plurality of APs based on the neighbor relationships and/or the path losses between the plurality of APs in the network, so that the first AP provides, when the network enters the power-saving state, the association service for the terminal intending to access the network. Because the first AP is obtained based on the neighbor relationships and/or the path losses between the plurality of APs, and is not determined based on a terminal behavior, when the network enters the power-saving state, basic signal coverage of the network can be ensured by using the first AP, and a network use requirement can be ensured while burst service access is monitored, so that power saving can be implemented to a large extent while ensuring user experience.

It should be noted that a sequence of steps of AP selection method provided in embodiments of this application may be appropriately adjusted, or steps may be correspondingly added or deleted based on a situation. Any variant method readily figured out by a person skilled in the art within the technical scope disclosed in this application shall fall within the protection scope of this application, and therefore, details are not described.

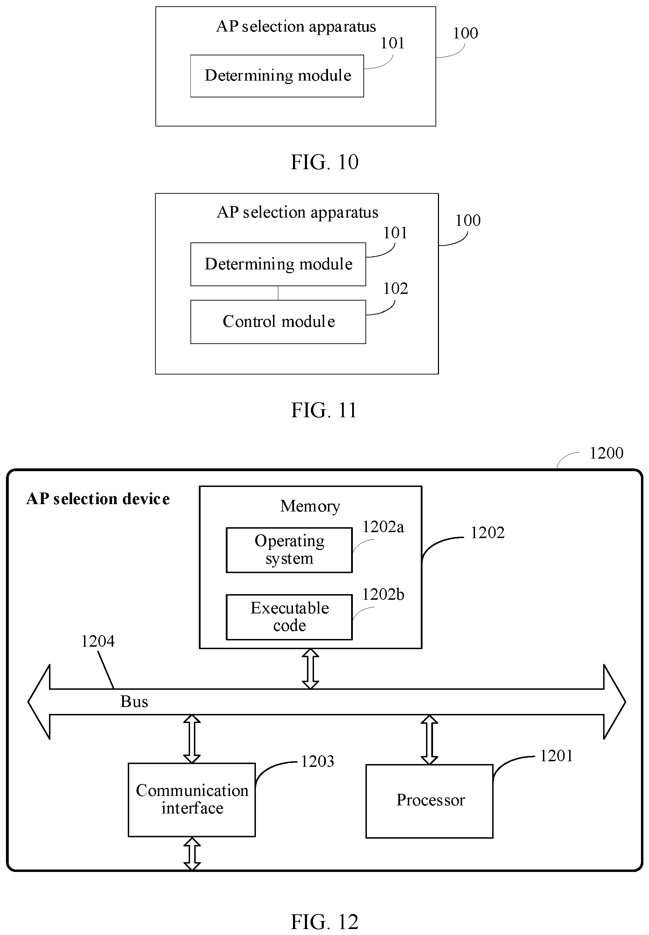

The foregoing describes the AP selection method in embodiments of this application. Corresponding to the foregoing method, embodiments of this application further provide an AP selection apparatus. FIG. 10 and FIG. 11 are diagrams of structures of an AP selection apparatus according to embodiments of this application. Based on the following a plurality of modules shown in FIG. 11, the AP selection apparatus shown in FIG. 11 can perform all or some of the operations shown in FIG. 5. It should be understood that the apparatus may include more additional modules than the shown modules, or some of the shown modules are omitted. This is not limited in embodiments of this application. As shown in FIG. 10, the AP selection apparatus 100 includes:

a determining module 101, configured to determine a first AP in a plurality of APs based on neighbor relationships and/or path losses between the plurality of APs in a network, where the first AP is configured to provide, when the network enters a power-saving state, an association service for a terminal intending to access the network.

Optionally, the determining module 101 is specifically configured to: determine an AP set based on the neighbor relationships and/or the path losses between the plurality of APs, where the AP set includes a plurality of candidate APs; and determine the first AP in the plurality of candidate APs based on terminal association features of the plurality of candidate APs, where a terminal association feature of any one candidate AP indicates a status of association between the any one candidate AP and a terminal.

Optionally, the determining module 101 is configured to: determine, in the plurality of candidate APs based on the terminal association features of the plurality of candidate APs, an AP associated with a specified terminal; and determine the first AP based on the AP associated with the specified terminal.

Optionally, as shown in FIG. 11, the apparatus 100 further includes a control module 102, configured to: in a power-saving period of the network, control the network to enter the power-saving state, to enable the first AP to provide an association service for a terminal intending to access the network, and to enable at least one other AP to enter a power-saving state, where another AP is an AP other than the first AP in the plurality of APs.

Optionally, the control module 102 is specifically configured to: adjust transmit power of the first AP, to enable signal coverage obtained by adjusting the transmit power of the first AP to cover signal coverage of the plurality of APs.

Optionally, the control module 102 is further configured to: in the power-saving period, if a service trigger indication from a terminal is detected by an AP in the plurality of APs that does not enter a power-saving state, control the network to exit the power-saving state, to enable the plurality of APs to provide an association service for the terminal.

Optionally, the control module 102 is further configured to: in the power-saving period, if duration in which the terminal continuously associates with a second AP reaches a first duration threshold, control the network to enter the power-saving state again, to enable the first AP to provide an association service for a terminal intending to access the network; and keep the second AP continuing to provide the association service for the terminal, to enable an AP other than the second AP in the at least one other AP to enter a power-saving state.

Optionally, the first AP is determined from the plurality of candidate APs, and the control module 102 is further configured to: if the plurality of candidate APs include the second AP, update the second AP to the first AP.

Optionally, when no AP associated with a specified terminal exists in an AP other than the first AP in the plurality of APs, the at least one other AP includes all APs in the plurality of APs other than the first AP. When an AP associated with a specified terminal exists in an AP other than the first AP in the plurality of APs, the at least one other AP includes all APs in the plurality of APs other than the first AP and the AP associated with the specified terminal.

Optionally, an AP entering a power-saving state includes: A power supply of the AP is in an off state. Alternatively, the AP operates in a low power consumption mode, where power consumption of the AP in the low power consumption mode is lower than power consumption of the AP in a normal operating mode.

Optionally, the specified terminal has one or more of the following features: having no capability of actively associating with an AP, having no roaming capability, service load being greater than a load threshold, or duration of continuous association with an AP being greater than a second duration threshold.

Optionally, the control module 102 is specifically configured to: when a moment of the network is in the power-saving period, if no roaming event occurs in the network within specified duration before the moment, control the network to enter the power-saving state.

Optionally, the first AP is determined from the plurality of APs based on centrality of each of the plurality of APs, and centrality of any one of the plurality of APs is obtained based on the neighbor relationships and/or the path losses between the plurality of APs.

Optionally, the centrality includes one or more of the following: degree centrality or closeness centrality.

Optionally, the first AP is determined from the plurality of APs based on an average path loss of each of the plurality of APs, and an average path loss of any one of the plurality of APs is obtained based on the path losses between the plurality of APs.

Optionally, the first AP is further determined from the plurality of APs based on an association preference degree of each of the plurality of APs, an association preference degree of any one of the plurality of APs is obtained based on a terminal association feature of the any one AP, and the terminal association feature of the any one AP indicates a status of association between the any one AP and a terminal.

Optionally, the terminal association feature of the any one AP includes one or more of the following: total duration in which a terminal associates with the any one AP, a total quantity of times that the any one AP provides association for a terminal, or a total quantity of terminals that have associated with the any one AP.

In conclusion, in the AP selection apparatus provided in embodiments of this application, the first AP can be determined from the plurality of APs based on the neighbor relationships and/or the path losses between the plurality of APs in the network, so that the first AP provides, when the network enters the power-saving state, the association service for the terminal intending to access the network. Because the first AP is obtained based on the neighbor relationships and/or the path losses between the plurality of APs, and is not determined based on a terminal behavior, when the network enters the power-saving state, basic signal coverage of the network can be ensured by using the first AP, and a network use requirement can be ensured while burst service access is monitored, so that power saving can be implemented to a large extent while ensuring user experience.

It can be clearly understood by a person skilled in the art that, for the purpose of convenient and brief description, for detailed operating processes of the foregoing apparatus and modules, refer to corresponding content in the foregoing method embodiments. Details are not described herein again.

An embodiment of this application provides an AP selection device. The AP selection device is configured to implement some or all functions in the AP selection method provided in embodiments of this application. The device may be a computing device or a network control device. FIG. 12 is a diagram of a structure of an AP selection device according to an embodiment of this application. As shown in FIG. 12, the AP selection device 1200 includes a processor 1201, a memory 1202, a communication interface 1203, and a bus 1204. The processor 1201, the memory 1202, and the communication interface 1203 are in communication connection with each other through the bus 1204.

The processor 1201 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core processor (single-CPU), or a multi-core processor (multi-CPU). The dedicated hardware chip is a hardware module capable of performing high-performance processing. The dedicated hardware chip includes at least one of a digital signal processor, an application-specific integrated circuit (application-specific integrated circuit, ASIC), a field-programmable gate array (field-programmable gate array, FPGA), or a network processor (network processor, NP). The processor 1201 may be an integrated circuit chip and has a signal processing capability. In an implementation process, some or all functions of the AP selection method in this application may be implemented by using an integrated logic circuit of hardware in the processor 1201 or instructions in a form of software.

The memory 1202 is configured to store a computer program, and the computer program includes an operating system 1202a and executable code (namely, program instructions) 1202b. For example, the memory 1202 is a read-only memory or another type of static storage device that can store static information and instructions, a random access memory or another type of dynamic storage device that can store information and instructions, an electrically erasable programmable read-only memory, a compact disc read-only memory or another optical disk storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected executable code in a form of instructions or a data structure and that can be accessed by a computer. This is not limited thereto. For example, the memory 1202 is configured to store an egress queue. For example, the memory 1202 exists independently, and is connected to the processor 1201 through the bus 1204. Alternatively, the memory 1202 is integrated with the processor 1201. The memory 1202 may store the executable code. When the executable code stored in the memory 1202 is executed by the processor 1201, the processor 1201 is configured to perform some or all functions of the AP selection method provided in embodiments of this application. For an implementation of performing the process by the processor 1201, accordingly refer to related descriptions in the foregoing embodiments. The memory 1202 may further include a software module, data, and the like that are needed by another running process like the operating system.

The communication interface 1203 uses a transceiver module, for example, but not limited to a transceiver, to implement communication with another device or a communication network. For example, the communication interface 1203 may be any one or any combination of the following components having a network access function: a network interface (for example, an ethernet interface) or a wireless network interface card.

The bus 1204 is a communication bus of any type and is configured to implement an interconnection between internal components (for example, the memory 1202, the processor 1201, and the communication interface 1203) of the AP selection device, for example, a system bus. In this embodiment of this application, an example in which the foregoing components in the AP selection device are interconnected through the bus 1204 is used for description. Optionally, the foregoing components in the AP selection device 1200 may be in communication connection with each other in a connection manner other than a manner using the bus 1204. For example, the foregoing components in the AP selection device 1200 are interconnected through an internal logical interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. Specific implementation forms of the foregoing components are not limited in embodiments of this application. Descriptions of procedures corresponding to the foregoing accompanying drawings have respective focuses. For a part that is not described in detail in a procedure, refer to related descriptions of other procedures.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product that provides a program development platform includes one or more computer instructions. When these computer program instructions are loaded and executed on a computing device, all or some of functions of the AP selection method provided in embodiments of this application are implemented.

The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores the computer program instructions that provide the program development platform.

An embodiment of this application further provides a computer cluster. The computer cluster includes a plurality of computing devices. The plurality of computing devices include a plurality of processors and a plurality of memories. The plurality of memories store program instructions, and the plurality of processors run the program instructions, to enable the computer cluster to implement functions of the AP selection method provided in embodiments of this application. For an implementation of each computing device in the computer cluster, accordingly refer to implementations of the foregoing computing device. Details are not described herein again.

An embodiment of this application further provides a computer-readable storage medium. The computer-readable storage medium is a non-volatile computer-readable storage medium. The computer-readable storage medium includes program instructions. When the program instructions are run on a computing device, the computing device is enabled to implement the AP selection method provided in embodiments of this application.

An embodiment of this application further provides a computer program product including instructions. When the computer program product runs on a computer, the computer is enabled to implement the AP selection method provided in embodiments of this application.

A person of ordinary skill in the art may understand that all or some of the steps of embodiments may be implemented by using hardware or a program instructing related hardware. The program may be stored in a computer-readable storage medium. The foregoing storage medium may be a read-only memory, a magnetic disk, an optical disc, or the like.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions. For example, original data, executable code, and the like in this application are obtained under full authorization.

In embodiments of this application, the terms "first", "second", and "third" are merely used for description, but cannot be understood as an indication or implication of relative importance. The term "at least one" means one or more, and the term "plurality of" means two or more, unless otherwise expressly limited.

The term "and/or" in this application describes only an association relationship between associated objects, and indicates that three relationships may exist. For example, A and/or B may indicate the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. An access point AP selection method, wherein the method comprises:

   determining a first access point AP in a plurality of APs based on neighbor relationships and/or path losses between the plurality of APs in a network, wherein
   the first AP is configured to provide, when the network enters a power-saving state, an association service for a terminal intending to access the network.

2. The method according to claim 1, wherein determining the first AP in the plurality of APs based on the neighbor relationships and/or the path losses between the plurality of APs in the network comprises:

   determining an AP set based on the neighbor relationships and/or the path losses between the plurality of APs, wherein the AP set comprises a plurality of candidate APs; and
   determining the first AP in the plurality of candidate APs based on terminal association features of the plurality of candidate APs, wherein a terminal association feature of any one candidate AP indicates a status of association between the any one candidate AP and a terminal.

3. The method according to claim 2, wherein determining the first AP in the plurality of candidate APs based on the terminal association features of the plurality of candidate APs comprises:

   determining, in the plurality of candidate APs based on the terminal association features of the plurality of candidate APs, an AP associated with a specified terminal; and
   determining the first AP based on the AP associated with the specified terminal.

4. The method according to any one of claims 1 to 3, wherein the method further comprises:
   in a power-saving period of the network, controlling the network to enter the power-saving state, to enable the first AP to provide an association service for a terminal intending to access the network, and to enable at least one other AP to enter a power-saving state, wherein the at least one other AP is an AP other than the first AP in the plurality of APs.

5. The method according to claim 4, wherein controlling the network to enter the power-saving state, to enable the first AP to provide the association service for the terminal intending to access the network comprises:
   adjusting transmit power of the first AP, to enable signal coverage obtained by adjusting the transmit power of the first AP to cover signal coverage of the plurality of APs.

6. The method according to claim 4 or 5, wherein after controlling the network to enter the power-saving state, the method further comprises:
   in the power-saving period, if a service trigger indication from a terminal is detected by an AP in the plurality of APs that does not enter a power-saving state, controlling the network to exit the power-saving state, to enable the plurality of APs to provide an association service for the terminal.

7. The method according to claim 6, wherein after controlling the network to exit the power-saving state, the method further comprises:
   in the power-saving period, if duration in which the terminal continuously associates with a second AP reaches a first duration threshold, controlling the network to enter the power-saving state again, to enable the first AP to provide an association service for a terminal intending to access the network; and keeping the second AP continuing to provide the association service for the terminal, to enable an AP other than the second AP in the at least one other AP to enter a power-saving state.

8. The method according to claim 7, wherein the first AP is determined from the plurality of candidate APs, and before controlling the network to enter the power-saving state again, the method further comprises:
   if the plurality of candidate APs comprise the second AP, updating the second AP to the first AP.

9. The method according to any one of claims 4 to 8, wherein

   when no AP associated with a specified terminal exists in an AP other than the first AP in the plurality of APs, the at least one other AP comprises all APs in the plurality of APs other than the first AP; or
   when an AP associated with a specified terminal exists in an AP other than the first AP in the plurality of APs, the at least one other AP comprises all APs in the plurality of APs other than the first AP and the AP associated with the specified terminal.

10. The method according to any one of claims 4 to 9, wherein an AP entering a power-saving state comprises: a power supply of the AP is in an off state; or the AP operates in a low power consumption mode, wherein power consumption of the AP in the low power consumption mode is lower than power consumption of the AP in a normal operating mode.

11. The method according to claim 3 or 9, wherein the specified terminal has one or more of the following features: having no capability of actively associating with an AP, having no roaming capability, service load being greater than a load threshold, or duration of continuous association with an AP being greater than a second duration threshold.

12. The method according to any one of claims 4 to 11, wherein in the power-saving period of the network, controlling the network to enter the power-saving state comprises:
   when a moment of the network is in the power-saving period, if no roaming event occurs in the network within specified duration before the moment, controlling the network to enter the power-saving state.

13. The method according to any one of claims 1 to 12, wherein the first AP is determined from the plurality of APs based on centrality of each of the plurality of APs, and centrality of any one of the plurality of APs is obtained based on the neighbor relationships and/or the path losses between the plurality of APs.

14. The method according to claim 13, wherein the centrality comprises one or more of the following: degree centrality or closeness centrality.

15. The method according to any one of claims 1 to 14, wherein the first AP is determined from the plurality of APs based on an average path loss of each of the plurality of APs, and an average path loss of any one of the plurality of APs is obtained based on the path losses between the plurality of APs.

16. The method according to any one of claims 1 to 15, wherein the first AP is further determined from the plurality of APs based on an association preference degree of each of the plurality of APs, an association preference degree of any one of the plurality of APs is obtained based on a terminal association feature of the any one AP, and the terminal association feature of the any one AP indicates a status of association between the any one AP and a terminal.

17. The method according to claim 2, 3, or 16, wherein the terminal association feature of the any one AP comprises one or more of the following: total duration in which a terminal associates with the any one AP, a total quantity of times that the any one AP provides association for a terminal, or a total quantity of terminals that have associated with the any one AP.

18. An access point AP selection apparatus, wherein the apparatus comprises:

a determining module, configured to determine a first AP in a plurality of APs based on neighbor relationships and/or path losses between the plurality of APs in a network, wherein
the first AP is configured to provide, when the network enters a power-saving state, an association service for a terminal intending to access the network.

19. The apparatus according to claim 18, wherein the determining module is specifically configured to:

determine an AP set based on the neighbor relationships and/or the path losses between the plurality of APs, wherein the AP set comprises a plurality of candidate APs; and
determine the first AP in the plurality of candidate APs based on terminal association features of the plurality of candidate APs, wherein a terminal association feature of any one candidate AP indicates a status of association between the any one candidate AP and a terminal.

20. The apparatus according to claim 19, wherein the determining module is configured to:

determine, in the plurality of candidate APs based on the terminal association features of the plurality of candidate APs, an AP associated with a specified terminal; and
determine the first AP based on the AP associated with the specified terminal.

21. The apparatus according to any one of claims 18 to 20, wherein the apparatus further comprises:
a control module, configured to: in a power-saving period of the network, control the network to enter the power-saving state, to enable the first AP to provide an association service for a terminal intending to access the network, and to enable at least one other AP to enter a power-saving state, wherein the at least one other AP is an AP other than the first AP in the plurality of APs.

22. The apparatus according to claim 21, wherein the control module is specifically configured to:
adjust transmit power of the first AP, to enable signal coverage obtained by adjusting the transmit power of the first AP to cover signal coverage of the plurality of APs.

23. The apparatus according to claim 21 or 22, wherein the control module is further configured to:
in the power-saving period, if a service trigger indication from a terminal is detected by an AP in the plurality of APs that does not enter a power-saving state, control the network to exit the power-saving state, to enable the plurality of APs to provide an association service for the terminal.

24. The apparatus according to claim 23, wherein the control module is further configured to:
in the power-saving period, if duration in which the terminal continuously associates with a second AP reaches a first duration threshold, control the network to enter the power-saving state again, to enable the first AP to provide an association service for a terminal intending to access the network; and keep the second AP continuing to provide the association service for the terminal, to enable an AP other than the second AP in the at least one other AP to enter a power-saving state.

25. The apparatus according to claim 24, wherein the first AP is determined from the plurality of candidate APs, and the control module is further configured to:
if the plurality of candidate APs comprise the second AP, update the second AP to the first AP.

26. The apparatus according to any one of claims 21 to 25, wherein

when no AP associated with a specified terminal exists in an AP other than the first AP in the plurality of APs, the at least one other AP comprises all APs in the plurality of APs other than the first AP; or
when an AP associated with a specified terminal exists in an AP other than the first AP in the plurality of APs, the at least one other AP comprises all APs in the plurality of APs other than the first AP and the AP associated with the specified terminal.

27. The apparatus according to any one of claims 21 to 26, wherein an AP entering a power-saving state comprises: a power supply of the AP is in an off state; or the AP operates in a low power consumption mode, wherein power consumption of the AP in the low power consumption mode is lower than power consumption of the AP in a normal operating mode.

28. The apparatus according to claim 20 or 26, wherein the specified terminal has one or more of the following features: having no capability of actively associating with an AP, having no roaming capability, service load being greater than a load threshold, or duration of continuous association with an AP being greater than a second duration threshold.

29. The apparatus according to any one of claims 21 to 28, wherein the control module is specifically configured to:
when a moment of the network is in the power-saving period, if no roaming event occurs in the network within specified duration before the moment, control the network to enter the power-saving state.

30. The apparatus according to any one of claims 18 to 29, wherein the first AP is determined from the plurality of APs based on centrality of each of the plurality of APs, and centrality of any one of the plurality of APs is obtained based on the neighbor relationships and/or the path losses between the plurality of APs.

31. The apparatus according to claim 30, wherein the centrality comprises one or more of the following: degree centrality or closeness centrality.

32. The apparatus according to any one of claims 18 to 31, wherein the first AP is determined from the plurality of APs based on an average path loss of each of the plurality of APs, and an average path loss of any one of the plurality of APs is obtained based on the path losses between the plurality of APs.

33. The apparatus according to any one of claims 18 to 32, wherein the first AP is further determined from the plurality of APs based on an association preference degree of each of the plurality of APs, an association preference degree of any one of the plurality of APs is obtained based on a terminal association feature of the any one AP, and the terminal association feature of the any one AP indicates a status of association between the any one AP and a terminal.

34. The apparatus according to claim 19, 20, or 33, wherein the terminal association feature of the any one AP comprises one or more of the following: total duration in which a terminal associates with the any one AP, a total quantity of times that the any one AP provides association for a terminal, or a total quantity of terminals that have associated with the any one AP.

35. An access point AP selection device, comprising a memory and a processor, wherein the memory stores program instructions, and the processor runs the program instructions to perform the method according to any one of claims 1 to 17.

36. A computer-readable storage medium, comprising program instructions, wherein when the program instructions are run on a computing device, the computing device is enabled to perform the method according to any one of claims 1 to 17.

**37.** A computer program product, wherein when the computer program product runs on a computer, the computer is enabled to perform the method according to any one of claims 1 to 17.

FIG. 1

FIG. 2

FIG. 3

FIG. 4

| |
|---|
| Group a plurality of APs in a network into one or more topology groups based on neighbor relationships and/or path losses between the plurality of APs in the network, where each topology group includes one or more APs |

— 501

| |
|---|
| Determine an AP set based on the neighbor relationships and/or the path losses between the plurality of APs in the network, where the AP set includes a plurality of candidate APs |

— 502

| |
|---|
| Determine a first AP in the plurality of candidate APs based on terminal association features of the plurality of candidate APs, where a terminal association feature of any one candidate AP indicates a status of association between the any one candidate AP and a terminal |

— 503

| |
|---|
| In a power-saving period of the network, control the network to enter a power-saving state, to enable the first AP to provide an association service for a terminal intending to access the network, and to enable at least one other AP to enter a power-saving state, where the at least one other AP is an AP other than the first AP in the plurality of APs |

— 504

| |
|---|
| In the power-saving period, if a service trigger indication from a terminal is detected by an AP in the plurality of APs that does not enter a power-saving state, control the network to exit the power-saving state, to enable the plurality of APs to provide an association service for the terminal |

— 505

| |
|---|
| In the power-saving period, if duration in which the terminal continuously associates with a second AP reaches a first duration threshold, control the network to enter the power-saving state again, to enable the first AP to provide an association service for a terminal intending to access the network; and keep the second AP continuing to provide the association service for the terminal, to enable an AP other than the second AP in the at least one other AP to enter a power-saving state |

— 506

| |
|---|
| After the power-saving period ends, control the network to exit the power-saving state, to enable the plurality of APs to provide the association service for the terminal |

— 507

FIG. 5

FIG. 6

| Obtain centrality of each of a plurality of APs based on neighbor relationships and/or path losses between the plurality of APs | 5021a |

Determine an AP set based on the centrality of each of the plurality of APs — 5022a

FIG. 7

Obtain an average path loss of each of a plurality of APs based on path losses between the plurality of APs — 5021b

Determine an AP set based on the average path loss of each of the plurality of APs — 5022b

FIG. 8

Obtain an association preference degree of any one of a plurality of APs based on a terminal association feature of the any one AP — 5021c

Determine an AP set based on the association preference degree of the any one of the plurality of APs — 5022c

FIG. 9

FIG. 10

FIG. 11

FIG. 12

## INTERNATIONAL SEARCH REPORT

| International application No. |
|---|
| **PCT/CN2023/129396** |

### A.    CLASSIFICATION OF SUBJECT MATTER

H04W 48/20(2009.01)i

According to International Patent Classification (IPC) or to both national classification and IPC

### B.    FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, ENTXT, DWPI, IEEE: 接入点, 信标, 路径损耗, 路损, 邻居, 拓扑, 链路, 节能, 省电, 休眠, 睡眠, 低功耗, 保持, 保障, 监视, AP, access point, beacon, pathloss, neighbor, link, topology, power-saving, sleep, low, power, keep, alive, active, monitor+

### C.    DOCUMENTS CONSIDERED TO BE RELEVANT

| Category* | Citation of document, with indication, where appropriate, of the relevant passages | Relevant to claim No. |
|---|---|---|
| X | US 2010002610 A1 (BOWSER, Robert et al.) 07 January 2010 (2010-01-07) claims 1-45, description, paragraphs 0046-0070 and 0086-0103, and figures 24-27 | 1-37 |
| A | CN 102761938 A (HUAWEI DEVICE CO., LTD.) 31 October 2012 (2012-10-31) entire document | 1-37 |
| A | CN 104145511 A (QUALCOMM INC.) 12 November 2014 (2014-11-12) entire document | 1-37 |
| A | US 2015288427 A1 (INTERDIGITAL PATENT HOLDINGS, INC.) 08 October 2015 (2015-10-08) entire document | 1-37 |
| A | WO 2022213703 A1 (HUAWEI TECHNOLOGIES CO., LTD.) 13 October 2022 (2022-10-13) entire document | 1-37 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 January 2024** | **22 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT<br>Information on patent family members | | International application No.<br><br>**PCT/CN2023/129396** |
|---|---|---|

| Patent document<br>cited in search report | | | Publication date<br>(day/month/year) | Patent family member(s) | | | Publication date<br>(day/month/year) |
|---|---|---|---|---|---|---|---|
| US | 2010002610 | A1 | 07 January 2010 | US | 2013329619 | A1 | 12 December 2013 |
| | | | | US | 2011280170 | A1 | 17 November 2011 |
| CN | 102761938 | A | 31 October 2012 | | None | | |
| CN | 104145511 | A | 12 November 2014 | WO | 2013134389 | A1 | 12 September 2013 |
| | | | | US | 2013238919 | A1 | 12 September 2013 |
| | | | | KR | 20140133904 | A | 20 November 2014 |
| | | | | US | 2015264646 | A1 | 17 September 2015 |
| | | | | JP | 2016028328 | A | 25 February 2016 |
| | | | | KR | 20150104641 | A | 15 September 2015 |
| | | | | EP | 2823675 | A1 | 14 January 2015 |
| | | | | JP | 2015513868 | A | 14 May 2015 |
| | | | | IN | 201406597 | P4 | 01 July 2016 |
| US | 2015288427 | A1 | 08 October 2015 | EP | 2918123 | A1 | 16 September 2015 |
| | | | | WO | 2014074919 | A1 | 15 May 2014 |
| | | | | EP | 3975650 | A1 | 30 March 2022 |
| | | | | JP | 2016501465 | A | 18 January 2016 |
| | | | | MY | 177534 | A | 17 September 2020 |
| | | | | US | 2022182106 | A1 | 09 June 2022 |
| | | | | IL | 238655 | A0 | 30 June 2015 |
| | | | | US | 2023370121 | A1 | 16 November 2023 |
| | | | | US | 2020259529 | A1 | 13 August 2020 |
| | | | | KR | 20150082558 | A | 15 July 2015 |
| | | | | US | 2019273534 | A1 | 05 September 2019 |
| | | | | CN | 104904292 | A | 09 September 2015 |
| | | | | IN | 202018018610 | A | 04 September 2020 |
| WO | 2022213703 | A1 | 13 October 2022 | CN | 115209440 | A | 18 October 2022 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310143630